# EUROPEAN PATENT SPECIFICATION

(11) **EP 2 974 825 B1**
(45) Date of publication and mention of the grant of the patent: **13.01.2021**
(21) Application number: 15157148.6
(22) Date of filing: 02.03.2015
(51) Int. Cl.: B23Q 15/00, B29C 67/00, G05B 19/4099, G05B 19/4097

(54) **MOBILE TERMINAL AND METHOD FOR CONTROLLING THE SAME**
MOBILES ENDGERÄT UND VERFAHREN ZUR STEUERUNG DAVON
TERMINAL MOBILE ET PROCÉDÉ DE COMMANDE DE CELUI-CI

(30) Priority: 16.07.2014 KR 20140089949
(43) Date of publication of application: 20.01.2016
(73) Proprietor: LG Electronics Inc., SEOUL, 07336 (KR)
(72) Inventor: Kim, Jonghwan, 137-893 Seoul (KR); Kim, Hyungjin, 137-893 Seoul (KR); Seo, Woochan, 137-893 Seoul (KR); Min, Kyungjin, 137-893 Seoul (KR)
(74) Representative: Ter Meer Steinmeister & Partner

(56) References cited:
- CN-A- 103 223 791
- US-A1- 2009 303 507
- US-A1- 2013 215 454
- US-A1- 2013 287 933
- US-B1- 8 412 588

## Description

### BACKGROUND OF THE INVENTION

### 1. Field of the invention

The present disclosure relates to a mobile terminal for controlling the drive of a 3D printer.

### 2. Description of the related art

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

As it becomes multifunctional, a mobile terminal can be allowed to capture still images or moving images, play music or video files, play games, receive broadcast and the like, so as to be implemented as an integrated multimedia player.

In recent years, studies of using a mobile terminal as a control device for controlling a solid object in connection with a 3D printer have been carried out. 3D printer is a manufacturing technology of depositing consecutive layers of material to generate a soled shaped object. The 3D printer can quickly produce a three-dimensional object based on a user's desired two-dimensional information, and thus is used to make a prototype sample or the like.

The 3D printer may include a modelling step of forming an engineering drawing of a three-dimensional object, a printing step of depositing a raw material to actually form an object, and a treatment step of performing a hardening or surface treatment on the printed object. According to an implementation method of the printing step, a method of implementing a 3D printer may be largely classified into a method of irradiating an ultraviolet (UV) laser beam on a liquid material layer to cure and deposit the material, a method of dropping a material ink using an inkjet head to cure and deposit the ink, and a method of irradiating ultraviolet (UV) light on a material layer with a desired pattern using a projector to cure and deposit the layer. Furthermore, the method of implementing a 3D printer may be classified into liquid, powder and solid types according to the characteristics of a material.

Since 3D printers with various sizes and materials of a printable solid object, various printing times, various printing schemes or the like are implemented, there is an inconvenience in which the printing of a solid object should be controlled with a suitable environment for a 3D printer to control the 3D printer. In particular, in case of a solid object including various shapes, sizes and complex structures, there is a problem in which it is difficult to control the printing of an accurate solid object at once according to each specification of the 3D printer.

US 2013/215454 A1 discloses a three-dimensional printer and a computing device. The three-dimensional printer is configured to form a physical object in three dimensions. The computing device is communicatively coupled to the three-dimensional printer and includes a three-dimensional printing module implemented at least partially in hardware to cause the three-dimensional printer to form the physical object in three dimensions as having functionality configured to communicate with a computing device.

US 8 412 588 B1 discloses systems and methods for fabricating products on demand. A manufacturable model, which may include information about a three-dimensional representation of a product to be fabricated, is received by a user of an electronic system and may be validated by the electronic system. A prototype of the product can be generated based at least in part on the manufacturable model, and the manufacturable model and/or the product can be made available for a selection by other users of the system. The product may be fabricated based at least in part on the manufacturable model using, for example, a three-dimensional printer, and may be delivered to users of an electronic system.

US 2013/287933 A1 discloses a three-dimensional printing system comprising a coarse 3D printing interface to form a 3D object core. The 3D printing system also comprises a fine 3D printing interface to form a 3D object shell around at least some of the 3D object core. The 3D printing system also comprises a controller to receive a dataset corresponding to a 3D object model and to direct the coarse 3D printing interface to form the 3D object core based on the dataset.

### SUMMARY OF THE INVENTION

An object of the present disclosure is to provide a system and a control method of forming a control command for selectively printing a modularized solid object.

In order to accomplish the above object, a mobile terminal according to the present invention comprises the features of claim 1 and a control method according to the present invention comprises the features of claim 13. According to the present disclosure the mobile terminal may include a wireless communication unit configured to perform wireless communication with a 3D printer configured to print a solid object, a display unit configured to display an image containing at least part of a plurality of modules, the plurality of modules is formed by dividing the solid object based on a preset criteria, and a controller configured to control the wireless communication unit to transmit a control signal to the 3D printer so as to print at least one selected from the plurality of modules based on a control command applied to the display unit.

According to an embodiment of the present invention, the solid object may be divided into a plurality of physically separated modules, and the controller may control the display unit to display a graphic image that receives a touch input corresponding to each of the plurality of modules.

According to an embodiment of the present invention, the controller may divide the solid object into a plurality of modules based on a touch input applied to the image.

According to an embodiment of the present invention, the controller may control the display unit to display a graphic image for selecting a connecting member that connects the plurality of modules.

According to an embodiment of the present invention, the controller may control the display unit to display print status information indicating the print status of the solid object based on the control command, and the controller may edit a solid object to be printed based on a touch input applied to the print status information.

According to an embodiment of the present invention, the preset criteria may correspond to any one of a material of a solid object, a printable capacity of the 3D printer and a structure of the solid object, and the controller may control the display unit to display a select window for selecting any one of the material of a solid object, the printable capacity of the 3D printer and the structure of the solid object along with the image.

According to an embodiment of the present invention, when the preset criteria corresponds to the printable capacity of the 3D printer, the display unit may display a graphic image corresponding to the capacity on the image, and the controller may move the graphic image based on a touch input applied to the display unit to select a print region of the solid object.

According to an embodiment of the present invention, the controller may control the display unit to display the selected module image while performing the printing based on the control command, and display the image of the solid object along with the module image.

According to an embodiment of the present invention, when the plurality of modules are selected, the controller may control the display unit to sequentially display a plurality of module images based on a touch input applied to the display unit.

According to an embodiment of the present invention, the controller may analyze a function of the solid object, and the preset criteria may be formed based on the function.

According to an embodiment of the present invention, when the solid object contains an inner space due to the function of the solid object, the controller may divide the solid object into a plurality of modules to print the inner space to be formed.

According to an embodiment of the present invention, the controller may control the display unit to display a select window for selecting the type of a filling member to be formed in the inner space.

According to an embodiment of the present invention, the controller may control the display unit to analyze the possibility of a print error based on an error region of the image and display a select window for selecting a correction method on the error region.

According to an embodiment of the present invention, the controller may control the display unit to display an alternative image to be combined with the remaining region of the image in place of the error region.

According to an embodiment of the present invention, the controller may control the display unit to display a recommended image containing the same type of module as that of the remaining module that is not selected module from the plurality of modules, and receiving a user's touch input to display it along with the selected module.

According to an embodiment of the present invention, when the image corresponds to a 2D image, the controller may control the display unit to display 3D modelling information to be combined with the 2D image.

According to an embodiment of the present invention, the controller may control the display unit to display 3D modelling information to be combined with one region of the image based on a user's touch input, and the controller may form a control command for printing the remaining region of the image as a relief.

According to an embodiment of the present invention, the controller may control the display unit to display a graphic image corresponding to each of the plurality of modules and receiving a touch input to adjust a resolution thereof.

According to an embodiment of the present invention, the controller may control the display unit to display a control bar for modifying the shape of any one module of the plurality of modules based on a touch applied to the any one module.

In order to accomplish another object, a control method of a mobile terminal according to the present disclosure may include performing wireless communication with a 3D printer configured to print a solid object, dividing the solid object into a plurality of modules based on a preset criteria, displaying an image containing at least part of the plurality of modules on a display unit, and transmitting a control signal to print at least one selected from the plurality of modules based on a touch input applied to the display unit.

The effect of a mobile terminal and a control method thereof will be described as follows.

According to at least one of the embodiments of the present disclosure, a solid object configured by a user can be divided into a plurality of modules by a function of a 3D printer or a user's control command. Accordingly, the 3D printer can print a solid object in a more accurate manner, and the user can print his or her desired solid object in a more precise manner.

Furthermore, a designated image may be modularized to partially display a solid object so as to provide various types of solid objects, and the image may be combined with another data to print a more creative solid object.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIGS. 1A through 1C are block diagrams for explaining a mobile terminal associated with the present disclosure;
FIG. 1D is a conceptual view illustrating a 3D printer controlled by a mobile terminal;
FIG. 2A is a flow chart for explaining a control method of a mobile terminal according to an embodiment of the present disclosure;
FIGS. 2B(a), 2B(b), 2B(c) and 2B(d) are conceptual views for explaining a control method in FIG. 2A according to an embodiment;
FIGS. 3A(a), 3A(b), 3B(a), 3B(b), 3C(a), 3C(b) and 3C(c) are conceptual views for explaining a control method of modularizing a solid object by a preset criteria;
FIGS. 4A(a), 4A(b), 4A(c), 4B(a), 4B(b), 4B(c), 4C(a), 4C(b), 4C(c), 4D(a), 4D(b) and 4D(c) are conceptual views illustrating a control method of modularizing a solid object by a user;
FIGS. 5A(a), 5A(b), 5B(a), 5B(b), 5B(c) and 5B(d) are conceptual views for explaining a control method of recommending a printing method;
FIGS. 6A, 6B(a) and 6B(b) are conceptual views for explaining a control method of displaying print status being printed in the unit of module;
FIGS. 7A(a), 7A(b), 7A(c), 7B(a) and 7B(b) are conceptual views for explaining a control method of printing a solid object having an inner vacant space;
FIGS. 8A(a), 8A(b), 8A(c), 8B(a), 8B(b) and 8B(c) are conceptual views for explaining a control method of controlling the correction of an image used for printing;
FIGS. 9A(a), 9A(b), 9B(a), 9B(b), 9B(c), 9C(a), 9C(b) through 9C(c) are conceptual views for explaining a control method of printing a 2D image as a solid object;
FIGS. 9D(a), 9D(b) and 9D(c) are conceptual views for explaining a control method of providing divided modules for printing conveniences; and
FIGS. 10A and 10B are conceptual views for explaining a control method of changing an output condition.

### DETAILED DESCRIPTION OF THE INVENTION

Description will now be given in detail according to the exemplary embodiments disclosed herein, with reference to the accompanying drawings. For the sake of brief description with reference to the drawings, the same or equivalent components will be provided with the same reference numbers, and description thereof will not be repeated. A suffix "module" and "unit" used for constituent elements disclosed in the following description is merely intended for easy description of the specification, and the suffix itself does not give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

It will be understood that, although the terms first, second, etc. may be used herein to describe various elements, these elements should not be limited by these terms. These terms are only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation as far as it represents a definitely different meaning from the context.

Terms 'include' or 'has' used herein should be understood that they are intended to indicate an existence of several components or several steps, disclosed in the specification, and it may also be understood that part of the components or steps may not be included or additional components or steps may further be included.

Mobile terminals described herein may include cellular phones, smart phones, laptop computers, digital broadcasting terminals, personal digital assistants (PDAs), portable multimedia players (PMPs), navigators, slate PCs, tablet PCs, ultra books, wearable devices (for example, smart watches, smart glasses, head mounted displays (HMDs)), and the like.

However, it may be easily understood by those skilled in the art that the configuration according to the exemplary embodiments of this specification can also be applied to stationary terminals such as digital TV, desktop computers and the like, excluding a case of being applicable only to the mobile terminals.

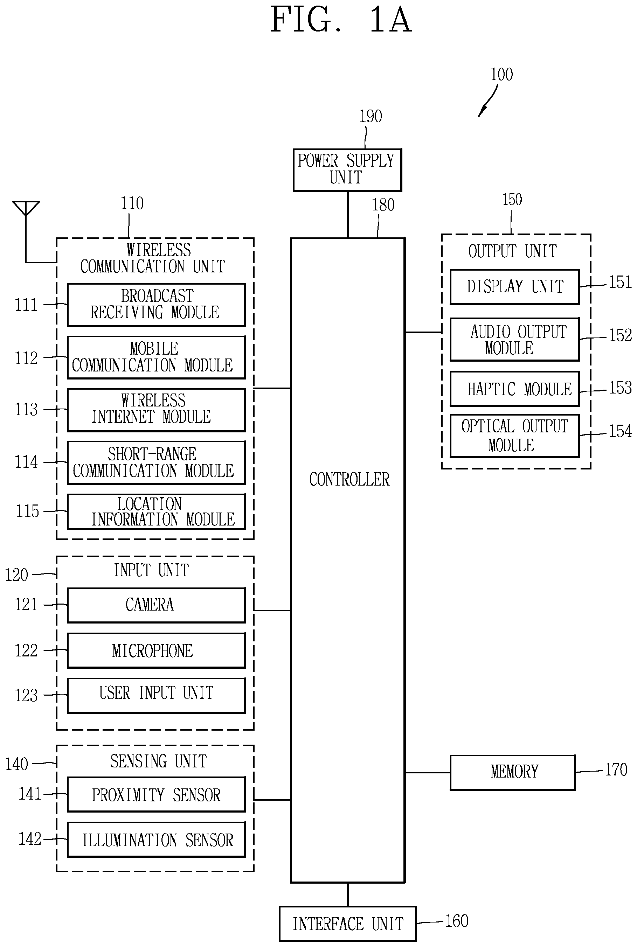

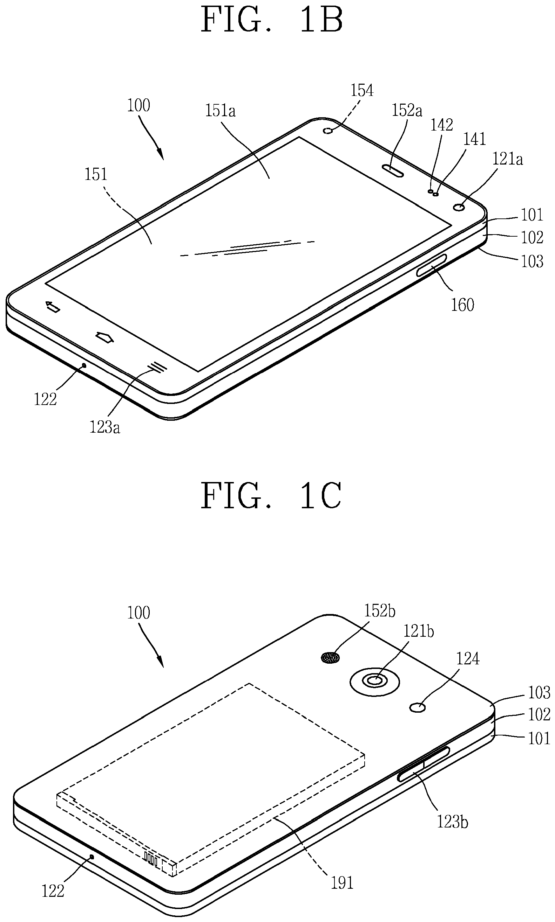

Referring to FIGS. 1A through 1C, FIG. 1A is a block diagram of a mobile terminal in accordance with the present disclosure, and FIGS. 1B and 1C are conceptual views of one example of the mobile terminal, viewed from different directions.

The mobile terminal 100 may include components, such as a wireless communication unit 110, an input unit 120, a sensing unit 140, an output unit 150, an interface unit 160, a memory 170, a controller 180, a power supply unit 190 and the like. FIG. 1A illustrates the mobile terminal having various components, but it may be understood that implementing all of the illustrated components is not a requirement. Greater or fewer components may alternatively be implemented.

In more detail, the wireless communication unit 110 of those components may typically include one or more modules which permit wireless communications between the mobile terminal 100 and a wireless communication system, between the mobile terminal 100 and another mobile terminal 100, or between the mobile terminal 100 and a network within which another mobile terminal 100 (or an external server) is located.

For example, the wireless communication unit 110 may include at least one of a broadcast receiving module 111, a mobile communication module 112, a wireless Internet module 113, a short-range communication module 114, a location information module 115 and the like.

The input unit 120 may include a camera 121 for inputting an image signal, a microphone 122 or an audio input module for inputting an audio signal, or a user input unit 123 (for example, a touch key, a push key (or a mechanical key), etc.) for allowing a user to input information. Audio data or image data collected by the input unit 120 may be analyzed and processed by a user's control command.

The sensing unit 140 may include at least one sensor which senses at least one of internal information of the mobile terminal, a surrounding environment of the mobile terminal and user information. For example, the sensing unit 140 may include a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, refer to the camera 121), a microphone 122, a battery gage, an environment sensor (for example, a barometer, a hygrometer, a thermometer, a radiation detection sensor, a thermal sensor, a gas sensor, etc.), and a chemical sensor (for example, an electronic nose, a health care sensor, a biometric sensor, etc.). On the other hand, the mobile terminal disclosed herein may utilize information in such a manner of combining information sensed by at least two sensors of those sensors.

The output unit 150 may be configured to output an audio signal, a video signal or a tactile signal. The output unit 150 may include a display unit 151, an audio output module 152, a haptic module 153, an optical output module 154 and the like. The display unit 151 may have an inter-layered structure or an integrated structure with a touch sensor so as to implement a touch screen. The touch screen may provide an output interface between the mobile terminal 100 and a user, as well as functioning as the user input unit 123 which provides an input interface between the mobile terminal 100 and the user.

The interface unit 160 may serve as an interface with various types of external devices connected with the mobile terminal 100. The interface unit 160, for example, may include wired or wireless headset ports, external power supply ports, wired or wireless data ports, memory card ports, ports for connecting a device having an identification module, audio input/output (I/O) ports, video I/O ports, earphone ports, or the like. The mobile terminal 100 may execute an appropriate control associated with a connected external device, in response to the external device being connected to the interface unit 160.

The memory 170 may store a plurality of application programs (or applications) executed in the mobile terminal 100, data for operations of the mobile terminal 100, instruction words, and the like. At least some of those application programs may be downloaded from an external server via wireless communication. Some others of those application programs may be installed within the mobile terminal 100 at the time of being shipped for basic functions of the mobile terminal 100 (for example, receiving a call, placing a call, receiving a message, sending a message, etc.). On the other hand, the application programs may be stored in the memory 170, installed in the mobile terminal 100, and executed by the controller 180 to perform an operation (or a function) of the mobile terminal 100.

The controller 180 may typically control an overall operation of the mobile terminal 100 in addition to the operations associated with the application programs. The controller 180 may provide or process information or functions appropriate for a user in a manner of processing signals, data, information and the like, which are input or output by the aforementioned components, or activating the application programs stored in the memory 170.

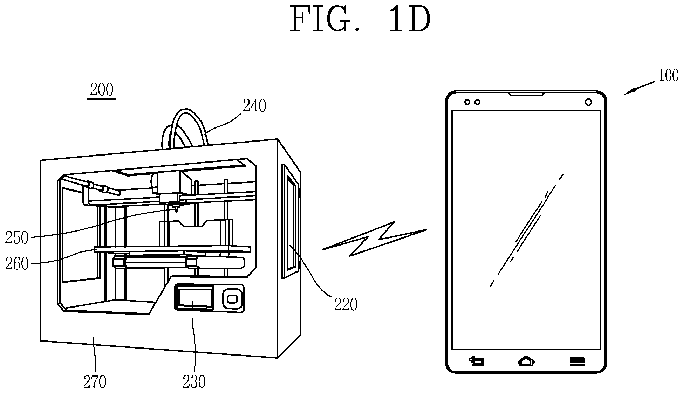

The controller 180 may control at least part of the components illustrated in FIG. 1, in order to drive the application programs stored in the memory 170. In addition, the controller 180 may drive the application programs by combining at least two of the components included in the mobile terminal 100 for operation.

The power supply unit 190 may receive external power or internal power and supply appropriate power required for operating respective elements and components included in the mobile terminal 100 under the control of the controller 180. The power supply unit 190 may include a battery, and the battery may be an embedded battery or a replaceable battery.

At least part of those elements and components may be combined to implement operation and control of the mobile terminal or a control method of the mobile terminal according to various exemplary embodiments described herein. Also, the operation and control or the control method of the mobile terminal may be implemented in the mobile terminal in such a manner of activating at least one application program stored in the memory 170.

The mobile communication module 112 may transmit/receive wireless signals to/from at least one of network entities, for example, a base station, an external mobile terminal, a server, and the like, on a mobile communication network, which is constructed according to technical standards or transmission methods for mobile communications (for example, Global System for Mobile Communication (GSM), Code Division Multi Access (CDMA), Wideband CDMA (WCDMA), High Speed Downlink Packet access (HSDPA), Long Term Evolution (LTE), etc.)

Here, the wireless signals may include audio call signal, video (telephony) call signal, or various formats of data according to transmission/reception of text/multimedia messages.

The wireless Internet module 113 denotes a module for wireless Internet access. This module may be internally or externally coupled to the mobile terminal 100. The wireless Internet module 113 may transmit/receive wireless signals via communication networks according to wireless Internet technologies.

Examples of such wireless Internet access may include Wireless LAN (WLAN), Wireless Fidelity (Wi-Fi) Direct, Digital Living Network Alliance (DLNA), Wireless Broadband (Wibro), Worldwide Interoperability for Microwave Access (Wimax), High Speed Downlink Packet Access (HSDPA), Long Term Evolution (LTE), and the like. The wireless Internet module 113 may transmit/receive data according to at least one wireless Internet technology within a range including even Internet technologies which are not aforementioned.

From the perspective that the wireless Internet accesses according to Wibro, HSDPA, GSM, CDMA, WCDMA, LET and the like are executed via a mobile communication network, the wireless Internet module 113 which performs the wireless Internet access via the mobile communication network may be understood as a type of the mobile communication module 112.

The short-range communication module 114 denotes a module for short-range communications. Suitable technologies for implementing the short-range communications may include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, and the like. The short-range communication module 114 may support wireless communications between the mobile terminal 100 and a wireless communication system, between the mobile terminal 100 and another mobile terminal 100, or between the mobile terminal and a network where another mobile terminal 100 (or an external server) is located, via wireless personal area networks.

Here, the another mobile terminal 100 may be a wearable device, for example, a smart watch, a smart glass or a head mounted display (HMD), which is able to exchange data with the mobile terminal 100 (or to cooperate with the mobile terminal 100). The short-range communication module 114 may sense (recognize) a wearable device, which is able to communicate with the mobile terminal), near the mobile terminal 100. In addition, when the sensed wearable device is a device which is authenticated to communicate with the mobile terminal 100 according to the present disclosure, the controller 180 may transmit at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user may check the received message using the wearable device.

The location information module 115 denotes a module for detecting or calculating a position of the mobile terminal. An example of the location information module 115 may include a Global Position System (GPS) module or a Wi-Fi module. For example, when the mobile terminal uses the GPS module, a position of the mobile terminal may be acquired using a signal sent from a GPS satellite. As another example, when the mobile terminal uses the Wi-Fi module, a position of the mobile terminal may be acquired based on information related to a wireless access point (AP) which transmits or receives a wireless signal to or from the Wi-Fi module.

Hereinafter, the input unit 120 will be described in more detail. The input unit 120 may be configured to provide an audio or video signal (or information) input to the mobile terminal or information input by a user to the mobile terminal. For the input of the audio information, the mobile terminal 100 may include one or a plurality of cameras 121. The camera 121 may process image frames of still pictures or video obtained by image sensors in a video call mode or a capture mode. The processed image frames may be displayed on the display unit 151. On the other hand, the plurality of cameras 121 disposed in the mobile terminal 100 may be arranged in a matrix configuration. By use of the cameras 121 having the matrix configuration, a plurality of image information having various angles or focal points may be input into the mobile terminal 100. Also, the plurality of cameras 121 may be arranged in a stereoscopic structure to acquire a left image and a right image for implementing a stereoscopic image.

The microphone 122 may process an external audio signal into electric audio data. The processed audio data may be utilized in various manners according to a function being executed in the mobile terminal 100 (or an application program being executed). On the other hand, the microphone 122 may include assorted noise removing algorithms to remove noise generated in the course of receiving the external audio signal.

The user input unit 123 may receive information input by a user. When information is input through the user input unit 123, the controller 180 may control an operation of the mobile terminal 100 to correspond to the input information. The user input unit 123 may include a mechanical input element (or a mechanical key, for example, a button located on a front/rear surface or a side surface of the mobile terminal 100, a dome switch, a jog wheel, a jog switch, etc.), and a touch-sensitive input means. As one example, the touch-sensitive input means may be a virtual key, a soft key or a visual key, which is displayed on a touch screen through software processing, or a touch key which is disposed on a portion except for the touch screen. On the other hand, the virtual key or the visual key may be displayable on the touch screen in various shapes, for example, graphic, text, icon, video or a combination thereof.

The sensing unit 140 may sense at least one of internal information of the mobile terminal, surrounding environment information of the mobile terminal and user information, and generate a sensing signal corresponding to it. The controller 180 may control an operation of the mobile terminal 100 or execute data processing, a function or an operation associated with an application program installed in the mobile terminal based on the sensing signal. Hereinafter, description will be given in more detail of representative sensors of various sensors which may be included in the sensing unit 140.

First, a proximity sensor 141 refers to a sensor to sense presence or absence of an object approaching to a surface to be sensed, or an object disposed near a surface to be sensed, by using an electromagnetic field or infrared rays without a mechanical contact. The proximity sensor 141 may be arranged at an inner region of the mobile terminal covered by the touch screen, or near the touch screen. The proximity sensor 141 may have a longer lifespan and a more enhanced utility than a contact sensor.

The proximity sensor 141, for example, may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, the proximity sensor 141 may sense proximity of a pointer to the touch screen by changes of an electromagnetic field, which is responsive to an approach of an object with conductivity. In this case, the touch screen (touch sensor) may be categorized into a proximity sensor.

Hereinafter, for the sake of brief explanation, a status that the pointer is positioned to be proximate onto the touch screen without contact will be referred to as 'proximity touch,' whereas a status that the pointer substantially comes in contact with the touch screen will be referred to as 'contact touch.' For the position corresponding to the proximity touch of the pointer on the touch screen, such position will correspond to a position where the pointer faces perpendicular to the touch screen upon the proximity touch of the pointer. The proximity sensor 141 may sense proximity touch, and proximity touch patterns (e.g., distance, direction, speed, time, position, moving status, etc.). On the other hand, the controller 180 may process data (or information) corresponding to the proximity touches and the proximity touch patterns sensed by the proximity sensor 141, and output visual information corresponding to the process data on the touch screen. In addition, the controller 180 may control the mobile terminal 100 to execute different operations or process different data (or information) according to whether a touch with respect to the same point on the touch screen is either a proximity touch or a contact touch.

A touch sensor may sense a touch (or touch input) applied onto the touch screen (or the display unit 151) using at least one of various types of touch methods, such as a resistive type, a capacitive type, an infrared type, a magnetic field type, and the like.

As one example, the touch sensor may be configured to convert changes of pressure applied to a specific part of the display unit 151 or a capacitance occurring from a specific part of the display unit 151, into electric input signals. Also, the touch sensor may be configured to sense not only a touched position and a touched area, but also touch pressure. Here, a touch object is an object to apply a touch input onto the touch sensor. Examples of the touch object may include a finger, a touch pen, a stylus pen, a pointer or the like.

When touch inputs are sensed by the touch sensors, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180 or the controller 180 itself.

On the other hand, the controller 180 may execute a different control or the same control according to a type of an object which touches the touch screen (or a touch key provided in addition to the touch screen). Whether to execute the different control or the same control according to the object which gives a touch input may be decided based on a current operating state of the mobile terminal 100 or a currently executed application program.

Meanwhile, the touch sensor and the proximity sensor may be executed individually or in combination, to sense various types of touches, such as a short (or tap) touch, a long touch, a multi-touch, a drag touch, a flick touch, a pinch-in touch, a pinch-out touch, a swipe touch, a hovering touch, and the like.

An ultrasonic sensor may be configured to recognize position information relating to a sensing object by using ultrasonic waves. The controller 180 may calculate a position of a wave generation source based on information sensed by an illumination sensor and a plurality of ultrasonic sensors. Since light is much faster than ultrasonic waves, a time for which the light reaches the optical sensor may be much shorter than a time for which the ultrasonic wave reaches the ultrasonic sensor. The position of the wave generation source may be calculated using the fact. In more detail, the position of the wave generation source may be calculated by using a time difference from the time that the ultrasonic wave reaches based on the light as a reference signal.

The camera 121 constructing the input unit 120 may be a type of camera sensor. The camera sensor may include at least one of a photo sensor and a laser sensor.

The camera 121 and the laser sensor may be combined to detect a touch of the sensing object with respect to a 3D stereoscopic image. The photo sensor may be laminated on the display device. The photo sensor may be configured to scan a movement of the sensing object in proximity to the touch screen. In more detail, the photo sensor may include photo diodes and transistors at rows and columns to scan content placed on the photo sensor by using an electrical signal which changes according to the quantity of applied light. Namely, the photo sensor may calculate the coordinates of the sensing object according to variation of light to thus obtain position information of the sensing object.

The display unit 151 may output information processed in the mobile terminal 100. For example, the display unit 151 may display execution screen information of an application program driven in the mobile terminal 100 or user interface (Ul) and graphic user interface (GUI) information in response to the execution screen information.

The display unit 151 may also be implemented as a stereoscopic display unit for displaying stereoscopic images.

The stereoscopic display unit 152 may employ a stereoscopic display scheme such as stereoscopic scheme (a glass scheme), an auto-stereoscopic scheme (glassless scheme), a projection scheme (holographic scheme), or the like.

The audio output module 152 may output audio data received from the wireless communication unit 110 or stored in the memory 160 in a call signal reception mode, a call mode, a record mode, a voice recognition mode, a broadcast reception mode, and the like. Also, the audio output module 152 may also provide audible output signals related to a particular function (e.g., a call signal reception sound, a message reception sound, etc.) performed by the mobile terminal 100. The audio output module 152 may include a receiver, a speaker, a buzzer or the like.

A haptic module 153 may generate various tactile effects the that user may feel. A typical example of the tactile effect generated by the haptic module 153 may be vibration. Strength, pattern and the like of the vibration generated by the haptic module 153 may be controllable by a user selection or setting of the controller. For example, the haptic module 153 may output different vibrations in a combining manner or a sequential manner.

Besides vibration, the haptic module 153 may generate various other tactile effects, including an effect by stimulation such as a pin arrangement vertically moving with respect to a contact skin, a spray force or suction force of air through a jet orifice or a suction opening, a touch on the skin, a contact of an electrode, electrostatic force, etc., an effect by reproducing the sense of cold and warmth using an element that can absorb or generate heat, and the like.

The haptic module 153 may be implemented to allow the user to feel a tactile effect through a muscle sensation such as the user's fingers or arm, as well as transferring the tactile effect through a direct contact. Two or more haptic modules 153 may be provided according to the configuration of the mobile terminal 100.

An optical output module 154 may output a signal for indicating an event generation using light of a light source. Examples of events generated in the mobile terminal 100 may include a message reception, a call signal reception, a missed call, an alarm, a schedule notice, an email reception, an information reception through an application, and the like.

A signal output by the optical output module 154 may be implemented in such a manner that the mobile terminal emits monochromatic light or light with a plurality of colors. The signal output may be terminated as the mobile terminal senses a user's event checking.

The interface unit 160 may serve as an interface with every external device connected with the mobile terminal 100. For example, the interface unit 160 may receive data transmitted from an external device, receive power to transfer to each element within the mobile terminal 100, or transmit internal data of the mobile terminal 100 to an external device. For example, the interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (referred to as 'identifying device', hereinafter) may take the form of a smart card. Accordingly, the identifying device may be connected with the terminal 100 via the interface unit 160.

When the mobile terminal 100 is connected with an external cradle, the interface unit 160 may serve as a passage to allow power from the cradle to be supplied to the mobile terminal 100 therethrough or may serve as a passage to allow various command signals input by the user from the cradle to be transferred to the mobile terminal therethrough. Various command signals or power input from the cradle may operate as signals for recognizing that the mobile terminal is properly mounted on the cradle.

The memory 170 may store programs for operations of the controller 180 and temporarily store input/output data (for example, phonebook, messages, still images, videos, etc.). The memory 170 may store data related to various patterns of vibrations and audio which are output in response to touch inputs on the touch screen.

The memory 170 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 170 over the Internet.

As aforementioned, the controller 180 may typically control the general operations of the mobile terminal 100. For example, the controller 180 may set or release a lock state for restricting a user from inputting a control command with respect to applications when a status of the mobile terminal meets a preset condition.

The controller 180 may also perform controlling and processing associated with voice calls, data communications, video calls, and the like, or perform pattern recognition processing to recognize a handwriting input or a picture drawing input performed on the touch screen as characters or images, respectively. In addition, the controller 180 may control one or combination of those components in order to implement various exemplary embodiment disclosed herein on the mobile terminal 100.

The power supply unit 190 may receive external power or internal power and supply appropriate power required for operating respective elements and components included in the mobile terminal 100 under the control of the controller 180. The power supply unit 190 may include a battery. The battery may be an embedded battery which is rechargeable or be detachably coupled to the terminal body for charging.

The power supply unit 190 may include a connection port. The connection port may be configured as one example of the interface unit 160 to which an external (re)charger for supplying power to recharge the battery is electrically connected.

As another example, the power supply unit 190 may be configured to recharge the battery in a wireless manner without use of the connection port. Here, the power supply unit 190 may receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable or its similar medium using, for example, software, hardware, or any combination thereof.

Referring to FIGS. 1B and 1C, the mobile terminal 100 disclosed herein may be provided with a bar-type terminal body. However, the present disclosure may not be limited to this, but also may be applicable to various structures such as watch type, clip type, glasses type or folder type, flip type, slide type, swing type, swivel type, or the like, in which two and more bodies are combined with each other in a relatively movable manner.

Here, the terminal body may be understood as a conception which indicates the mobile terminal 100 as at least one assembly.

The mobile terminal 100 may include a case (casing, housing, cover, etc.) forming the appearance of the terminal. In this embodiment, the case may be divided into a front case 101 and a rear case 102. Various electronic components may be incorporated into a space formed between the front case 101 and the rear case 102. At least one middle case may be additionally disposed between the front case 101 and the rear case 102

A display unit 151 may be disposed on a front surface of the terminal body to output information. As illustrated, a window 151a of the display unit 151 may be mounted to the front case 101 so as to form the front surface of the terminal body together with the front case 101.

In some cases, electronic components may also be mounted to the rear case 102. Examples of those electronic components mounted to the rear case 102 may include a detachable battery, an identification module, a memory card and the like. Here, a rear cover 103 for covering the electronic components mounted may be detachably coupled to the rear case 102. Therefore, when the rear cover 103 is detached from the rear case 102, the electronic components mounted to the rear case 102 may be externally exposed.

As illustrated, when the rear cover 103 is coupled to the rear case 102, a side surface of the rear case 102 may be partially exposed. In some cases, upon the coupling, the rear case 102 may also be completely shielded by the rear cover 103. On the other hand, the rear cover 103 may include an opening for externally exposing a camera 121b or an audio output module 152b.

The cases 101, 102, 103 may be formed by injection-molding synthetic resin or may be formed of a metal, for example, stainless steel (STS), titanium (Ti), or the like.

Unlike the example which the plurality of cases form an inner space for accommodating such various components, the mobile terminal 100 may be configured such that one case forms the inner space. In this example, a mobile terminal 100 having a uni-body formed in such a manner that synthetic resin or metal extends from a side surface to a rear surface may also be implemented.

On the other hand, the mobile terminal 100 may include a waterproofing unit (not shown) for preventing an introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal 100 may include a display unit 151, first and second audio output modules 152a and 152b, a proximity sensor 141, an illumination sensor 152, an optical output module 154, first and second cameras 121a and 121b, first and second manipulation units 123a and 123b, a microphone 122, an interface unit 160 and the like.

Hereinafter, description will be given of an exemplary mobile terminal 100 that the display unit 151, the first audio output module 152a, the proximity sensor 141, the illumination sensor 142, the optical output module 154, the first camera 121a and the first manipulation unit 123a are disposed on the front surface of the terminal body, the second manipulation unit 123b, the microphone 122 and the interface unit 160 are disposed on a side surface of the terminal body, and the second audio output module 152b and the second camera 121b are disposed on a rear surface of the terminal body, with reference to FIG. 1C.

Here, those components may not be limited to the arrangement, but be excluded or arranged on another surface if necessary. For example, the first manipulation unit 123a may not be disposed on the front surface of the terminal body, and the second audio output module 152b may be disposed on the side surface other than the rear surface of the terminal body.

The display unit 151 may output information processed in the mobile terminal 100. For example, the display unit 151 may display execution screen information of an application program driven in the mobile terminal 100 or user interface (Ul) and graphic user interface (GUI) information in response to the execution screen information.

The display unit 151 may include at least one of a liquid crystal display (LCD), a thin film transistor-liquid crystal display (TFT-LCD), an organic light emitting diode (OLED), a flexible display, a 3-dimensional (3D) display, and an e-ink display.

The display unit 151 may be implemented in two or more in number according to a configured aspect of the mobile terminal 100. For instance, a plurality of the display units 151 may be arranged on one surface to be spaced apart from or integrated with each other, or may be arranged on different surfaces.

The display unit 151 may include a touch sensor which senses a touch onto the display unit so as to receive a control command in a touching manner. When a touch is input to the display unit 151, the touch sensor may be configured to sense this touch and the controller 180 may generate a control command corresponding to the touch. The content which is input in the touching manner may be a text or numerical value, or a menu item which can be indicated or designated in various modes.

The touch sensor may be configured in a form of film having a touch pattern. The touch sensor may be a metal wire, which is disposed between the window 151a and a display (not shown) on a rear surface of the window 151a or patterned directly on the rear surface of the window 151a. Or, the touch sensor may be integrally formed with the display. For example, the touch sensor may be disposed on a substrate of the display or within the display.

The display unit 151 may form a touch screen together with the touch sensor. Here, the touch screen may serve as the user input unit 123 (see FIG. 1A). Therefore, the touch screen may replace at least some of functions of the first manipulation unit 123a.

The first audio output module 152a may be implemented in the form of a receiver for transferring voice sounds to the user's ear or a loud speaker for outputting various alarm sounds or multimedia reproduction sounds.

The window 151a of the display unit 151 may include a sound hole for emitting sounds generated from the first audio output module 152a. Here, the present disclosure may not be limited to this. It may also be configured such that the sounds are released along an assembly gap between the structural bodies (for example, a gap between the window 151a and the front case 101). In this case, a hole independently formed to output audio sounds may not be seen or hidden in terms of appearance, thereby further simplifying the appearance of the mobile terminal 100.

The optical output module 154 may output light for indicating an event generation. Examples of the event generated in the mobile terminal 100 may include a message reception, a call signal reception, a missed call, an alarm, a schedule notice, an email reception, information reception through an application, and the like. When a user's event checking is sensed, the controller may control the optical output unit 154 to stop the output of the light.

The first camera 121a may process video frames such as still or moving images obtained by the image sensor in a video call mode or a capture mode. The processed video frames may be displayed on the display unit 151 or stored in the memory 170.

The first and second manipulation units 123a and 123b are examples of the user input unit 123, which may be manipulated by a user to input a command for controlling the operation of the mobile terminal 100. The first and second manipulation units 123a and 123b may also be commonly referred to as a manipulating portion, and may employ any method if it is a tactile manner allowing the user to perform manipulation with a tactile feeling such as touch, push, scroll or the like. Furthermore, the first and second manipulation units 123a and 123b may employ any method allowing the user to perform manipulation with no tactile feeling such as a proximity touch, a hovering touch or the like.

The drawings are illustrated on the basis that the first manipulation unit 123a is a touch key, but the present disclosure may not be necessarily limited to this. For example, the first manipulation unit 123a may be configured with a mechanical key, or a combination of a touch key and a push key.

The content received by the first and second manipulation units 123a and 123b may be set in various ways. For example, the first manipulation unit 123a may be used by the user to input a command such as menu, home key, cancel, search, or the like, and the second manipulation unit 123b may be used by the user to input a command, such as controlling a volume level being output from the first or second audio output module 152a or 152b, switching into a touch recognition mode of the display unit 151, or the like.

On the other hand, as another example of the user input unit 123, a rear input unit (not shown) may be disposed on the rear surface of the terminal body. The rear input unit may be manipulated by a user to input a command for controlling an operation of the mobile terminal 100. The content input may be set in various ways. For example, the rear input unit may be used by the user to input a command, such as power on/off, start, end, scroll or the like, controlling a volume level being output from the first or second audio output module 152a or 152b, switching into a touch recognition mode of the display unit 151, or the like. The rear input unit may be implemented into a form allowing a touch input, a push input or a combination thereof.

The rear input unit may be disposed to overlap the display unit 151 of the front surface in a thickness direction of the terminal body. As one example, the rear input unit may be disposed on an upper end portion of the rear surface of the terminal body such that a user can easily manipulate it using a forefinger when the user grabs the terminal body with one hand. However, the present disclosure may not be limited to this, and the position of the rear input unit may be changeable.

When the rear input unit is disposed on the rear surface of the terminal body, a new user interface may be implemented using the rear input unit. Also, the aforementioned touch screen or the rear input unit may substitute for at least part of functions of the first manipulation unit 123a located on the front surface of the terminal body. Accordingly, when the first manipulation unit 123a is not disposed on the front surface of the terminal body, the display unit 151 may be implemented to have a larger screen.

On the other hand, the mobile terminal 100 may include a finger scan sensor which scans a user's fingerprint. The controller may use fingerprint information sensed by the finger scan sensor as an authentication means. The finger scan sensor may be installed in the display unit 151 or the user input unit 123.

The microphone 122 may be formed to receive the user's voice, other sounds, and the like. The microphone 122 may be provided at a plurality of places, and configured to receive stereo sounds.

The interface unit 160 may serve as a path allowing the mobile terminal 100 to exchange data with external devices. For example, the interface unit 160 may be at least one of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b may be further mounted to the rear surface of the terminal body. The second camera 121b may have an image capturing direction, which is substantially opposite to the direction of the first camera unit 121a.

The second camera 121b may include a plurality of lenses arranged along at least one line. The plurality of lenses may also be arranged in a matrix configuration. The cameras may be referred to as an 'array camera.' When the second camera 121b is implemented as the array camera, images may be captured in various manners using the plurality of lenses and images with better qualities may be obtained.

A flash 124 may be disposed adjacent to the second camera 121b. When an image of a subject is captured with the camera 121b, the flash 124 may illuminate the subject.

The second audio output module 152b may further be disposed on the terminal body. The second audio output module 152b may implement stereophonic sound functions in conjunction with the first audio output module 152a (refer to FIG. 1A), and may be also used for implementing a speaker phone mode for call communication.

At least one antenna for wireless communication may be disposed on the terminal body. The antenna may be installed in the terminal body or formed on the case. For example, an antenna which configures a part of the broadcast receiving module 111 (see FIG. 1A) may be retractable into the terminal body. Alternatively, an antenna may be formed in a form of film to be attached onto an inner surface of the rear cover 103 or a case including a conductive material may serve as an antenna.

A power supply unit 190 for supplying power to the mobile terminal 100 may be disposed on the terminal body. The power supply unit 190 may include a batter 191 which is mounted in the terminal body or detachably coupled to an outside of the terminal body.

The battery 191 may receive power via a power source cable connected to the interface unit 160. Also, the battery 191 may be (re)chargeable in a wireless manner using a wireless charger. The wireless charging may be implemented by magnetic induction or electromagnetic resonance.

On the other hand, the drawing illustrates that the rear cover 103 is coupled to the rear case 102 for shielding the battery 191, so as to prevent separation of the battery 191 and protect the battery 191 from an external impact or foreign materials. When the battery 191 is detachable from the terminal body, the rear case 103 may be detachably coupled to the rear case 102.

An accessory for protecting an appearance or assisting or extending the functions of the mobile terminal 100 may further be provided on the mobile terminal 100. As one example of the accessory, a cover or pouch for covering or accommodating at least one surface of the mobile terminal 100 may be provided. The cover or pouch may cooperate with the display unit 151 to extend the function of the mobile terminal 100. Another example of the accessory may be a touch pen for assisting or extending a touch input onto a touch screen.

FIG. 1D is a conceptual view illustrating a 3D printer controlled by a mobile terminal. The 3D printer 200 and the mobile terminal 100 may communicate with each other in a wired or wireless manner.

Referring to FIG. 1D, the 3D printer 200 may include a body portion 210, a supply unit 220, a display unit 230, a supply line 240, a nozzle unit 250 and a worktable 260.

The supply unit 220 is formed inside the body portion 210. A molding material for printing a solid object may be stored in the supply unit 220. A user may fill preset molding materials into the supply unit 220. The molding material may include various forms of raw materials, and it may be applied in a different manner according to a printing scheme in which a 3D printer is implemented. In particular, a constituent element constituting a solid object according to an embodiment of the present disclosure may include a decomposable material allowing the solid object to be decomposed according to the flow of time and a decomposition agent assisting decomposition.

The display unit 230 may further include a touch sensing unit formed on an outer surface of the body portion 210 to receive a user's touch input. The display unit 230 may receive a user's control command for forming the solid object or receive a touch input for setting a condition of the solid object formation. Furthermore, the display unit 230 may display information on a driving state of the 3D printer. In other words, the display unit may display a graphic image receiving a user's control command to control the 3D printer.

The nozzle unit 250 may be configured to form a solid object in various ways using the material. For example, the nozzle unit 250 may be configured to eject a liquid or solid type material or apply heat or light to cure or melt the molding material.

The supply line 240 for moving the material to the nozzle unit 250 may be formed between the nozzle unit 250 and the supply unit 220. The worktable 260 as a region formed with a solid object may be disposed adjacent to the nozzle unit 250. The printed solid object may be disposed on the worktable 260.

Furthermore, the 3D printer 200 may include a plurality of moving shafts for moving the nozzle unit 250 to form a various types of solid objects.

However, the structure of the supply line 240 and the nozzle unit 250 may be configured with various shapes based on the method of forming the solid object.

According to the present disclosure, a user may apply a control command to a mobile terminal to control the 3D printer, and set a solid object to be printed. Hereinafter, a control method of a mobile terminal for setting a solid object of the 3D printer will be described in detail.

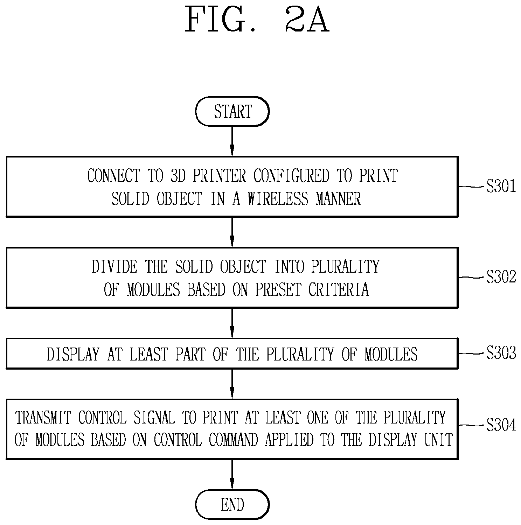

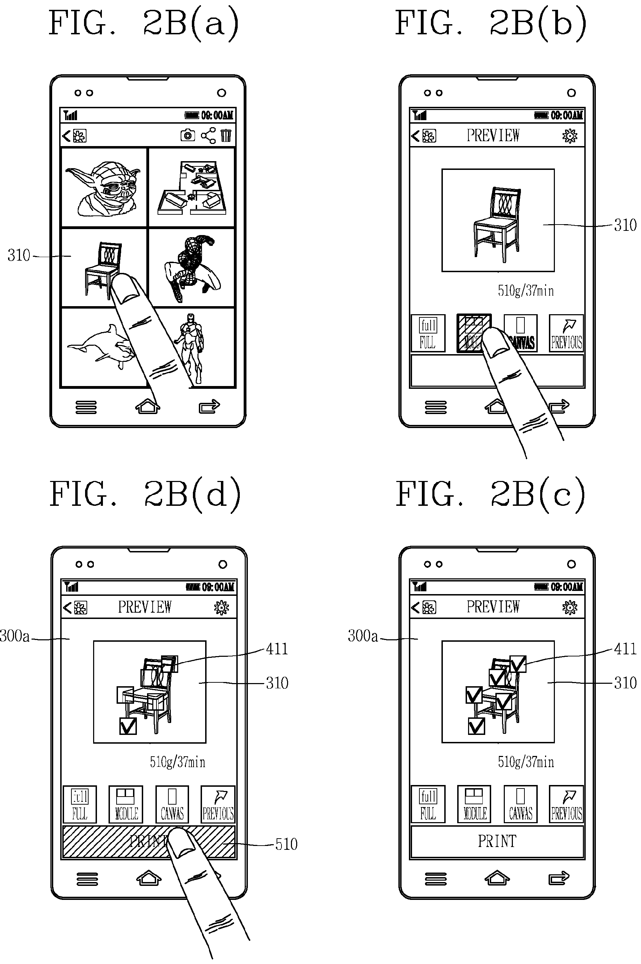

FIG. 2A is a flow chart for explaining a control method of a mobile terminal according to an embodiment of the present disclosure, and FIGS. 2B(a), 2B(b), 2B(c) and 2B(d) are conceptual views for explaining the control method of FIG. 2A according to an embodiment.

The wireless communication unit 110 is connected to a 3D printer configured to print a solid object in a wireless manner (S301). However, the mobile terminal may be connected to the 3D printer through an interface unit in a wired manner.

While being connected to the 3D printer in a wireless manner, the mobile terminal selects a first image 310 of a solid object to be printed based on the user's selection. For example, when the mobile terminal is connected to the 3D printer in a wireless manner in a state that an application for controlling the 3D printer is executed, the controller 180 may display visual data capable of selecting an image of the solid object. As illustrated in FIG. 2B(a), the display unit may display a plurality of images that can be printed as the solid object, and receive a user's touch input for selecting an image of the solid object desired to be printed.

Referring to FIG. 2B(c), when the first image 310 of a solid object to be printed is selected, the controller 180 controls the display unit to display first visual data 300a for controlling the printing of the solid object.

The first visual data 300a may include the first image 310, a first graphic image 411 receiving a touch input to display a divided module and a first icon 510 for controlling printing.

When an image of a solid object to be printed by the user is selected, the solid object is divided into a plurality of modules based on a preset criteria (S302). Specifically, the controller 180 displays the first image 310 of the solid object based on the user's selection, and displays a graphic image receiving a touch input to print the solid object, convert the screen so as to reselect the image, and view the image as a whole screen. Furthermore, the display unit may include a graphic image receiving a touch input to distinguish the solid object for each module.

The controller 180 divides the solid object for each module on the basis of a preset criteria based on a touch input applied to the graphic image, namely, the user's selection. However, when the image of the solid object is selected, the controller 180 may automatically divide the solid object for each preset module without user's selection.

The controller 180 displays at least part of the plurality of classified modules (S303). The display unit displays a first graphic image 411 for indicating that the module is separated on the first image 310. Referring to FIG. 2B(c), when a solid object desired to be printed corresponds to a chair, the controller 180 displays the first image 310 as a whole, and divides physically the divided constituent elements of the solid object into a plurality of modules, respectively. For example, a chair to be printed may be configured with five modules. The controller 180 may display a graphic image 411 corresponding to five modules, respectively, to overlap with each module.

However, the controller 180 may control the display unit 151 to display only at least part of the plurality of divided modules. For example, when the solid object corresponds to a chair, it may be controlled to display only one module configured with a backrest of the chair on the display unit 151. When one module is displayed on the display unit 151, the controller 180 may control the display unit 151 to display an image having substantially the same size as an actual size to be printed.

On the other hand, the plurality of graphic images 411 may be formed to receive a touch input to allow the user to select whether or not to print. For example, the controller 180 controls the wireless communication unit 110 to transfer data on a module selected by a touch input applied to the graphic image 411 to the 3D printer 200.

A control signal is transmitted to print one of a plurality of modules based on a control command applied to the display unit 151 (S304). In other words, when a touch input is applied to the first icon 510, the controller 180 controls the wireless communication unit 110 to transmit a control signal so as to print the selected part of the plurality of modules.

According to the present disclosure, when an image corresponding to the solid object for printing is selected, the image may be divided into modules based on a preset criteria, and the user may form a control signal for selectively displaying the divided modules.

FIGS. 2B(a), 2B(b), 2B(c) and 2B(d) are conceptual views for explaining a control method of displaying an image containing a plurality of modules according to another embodiment. The controller 180 may control the display unit 151 to display a modified image 310 including the plurality of modules being separated from one another.

Hereinafter, a control method of dividing the solid object into a plurality of modules based on a preset criteria will be described.

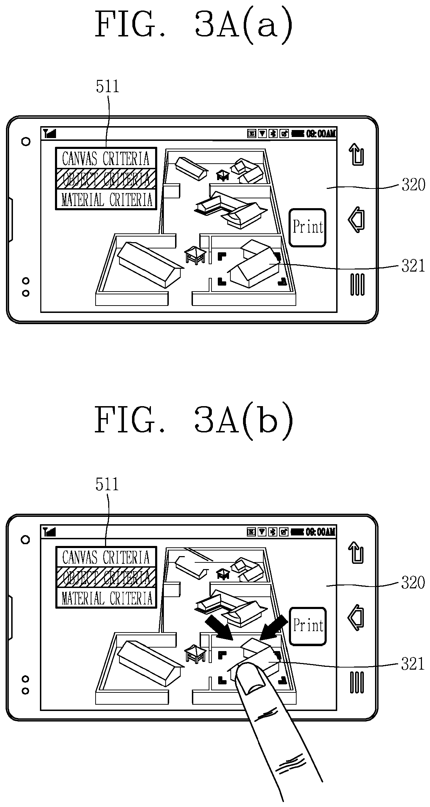

FIGS. 3A(a), 3A(b), 3B(a), 3B(b), 3C(a), 3C(b) and 3C(c) are conceptual views for explaining a control method of modularizing a solid object by a preset criteria. The controller 180 controls the display unit 151 to display an image of a solid object to be output by the user. The controller 180 may display the image to match the size of the display unit 151 in an enlarged or reduced manner. Otherwise, the display unit 151 may display the image as an actual size of the solid object.

Referring to FIGS. 3A(a) and 3A(b), the display unit 151 displays a second image 320 showing a solid object. For example, the second image 320 may include a plurality of house models, wall structures disposed between house models, and the like. Furthermore, the display unit 151 display a first select window 511 for selecting a criteria for modularizing the solid object, for example, a canvas criteria, an object criteria, a material criteria, an assembly criteria, a height criteria, and the like. Furthermore, when a second image corresponding to a solid object is selected, the controller 180 may analyze each component contained in the second image to display a modularizable criteria on the first select window 511.

The controller 180 modularizes the solid object based on a user's touch input applied to the first select window 511. Referring to FIGS. 3A(a) and 3A(b), the controller 180 modularizes the solid object based on the object, and controls the display unit 151 to display the plurality of modules 321 in a divisive manner. Here, object criteria corresponds to a division criteria for dividing a solid object into a plurality of objects. The second image may include a plurality of house models and wall structures, and each house model and wall structure may be sensed as an object. Accordingly, the controller 180 controls the display unit 151 to display a plurality of house models and wall structures, respectively, in a divisive manner.

The controller 180 may select at least one object based on a user's touch input. When a user's touch input is applied, the display unit 151 displays a visual effect indicating that the relevant object has been selected. For example, the controller 180 may control the display unit 151 to change the color of the relevant object or display a pointer or the like on the relevant object.

According to the present embodiment, when a solid object contained in the image is configured with a plurality of distinguished objects, the user may selectively display at least part of the plurality of objects.

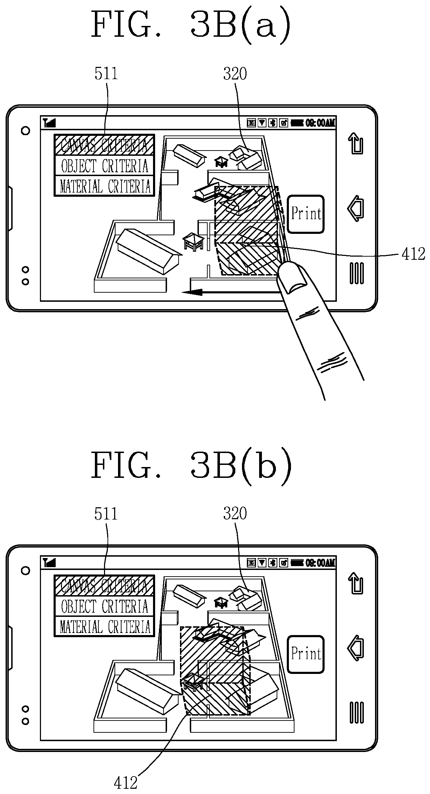

Referring to FIGS. 3B(a) and 3B(b), when selected by the user to divide an object based on a canvas criteria, the controller 180 controls the display unit 151 to display a graphic image 412 corresponding to the canvas on the image based on the size of the solid object and the size of the canvas. Here, the canvas may correspond to a maximum area that can be printed by the 3D printer, and thus may correspond to the worktable 260 (refer to FIG. 1D). In other words, it may be divided to correspond to a size in which the solid object can be printed at once. The graphic image 412 is displayed in a different size according to a 3D printer connected to the mobile terminal 100 in a wireless manner.

The controller 180 controls the display unit 151 to move the location of the graphic image 412 based on a touch input applied to the graphic image 412. In other words, the user may move the graphic image 412 to select a region of the solid object to be displayed.

Though not shown in detail in the drawing, a plurality of graphic images 412 may be formed based on the user's setting, and a control signal may be transmitted to the 3D printer to sequentially print a plurality of modules selected by the graphic image 412.

Furthermore, though not shown in the drawing, the controller 180 may modularize the solid object according to the height of the solid object based on the capacity of the 3D printer.

Accordingly, a solid object having a large size may be modularized based on the working capacity of the 3D printer. Accordingly, the user may more efficiently print a solid object having a large size.

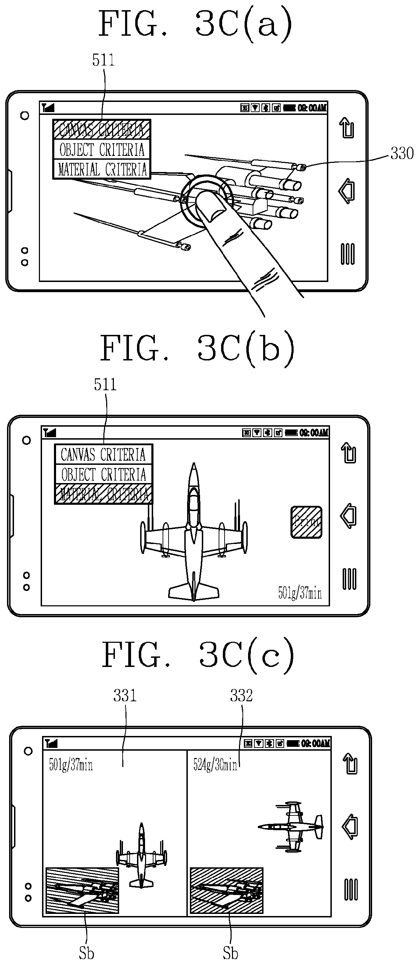

Referring to FIGS. 3C(a), 3C(b) and 3C(c), the controller 180 calculates the use amount of material according to a direction of the solid object based on a material criteria. When a third image 330 is selected, the controller 180 analyzes each component contained in the third image 330. In particular, when the 3D solid object is displayed, a supporting bar (sb) for supporting each component portion is displayed. The supporting bar is a shape for temporarily supporting a protruded region to form the protruded region, and artificially removed subsequent to the completion of printing. In other words, as increasing a region protruded from a reference region, the amount of material required to print the supporting bar (sb) increases. The controller 180 may determine the amount of material required for a solid object according to the print direction in addition to the supporting bar (sb). Furthermore, a print time for printing the solid object varies according to the size and print direction of the solid object. Moreover, the controller 180 may calculate a print time for printing the solid object in advance.

The controller 180 controls the display unit 151 to display a first and a second virtual print image 331, 332 showing print status according to the print direction in consideration of at least one of an amount of material and a print time. The first and the second virtual image 331, 332 display virtual images of the solid object, an amount of material and a print time when printed in different directions.

Accordingly, the user may determine the print direction in consideration of his or her desired print time and amount of material.

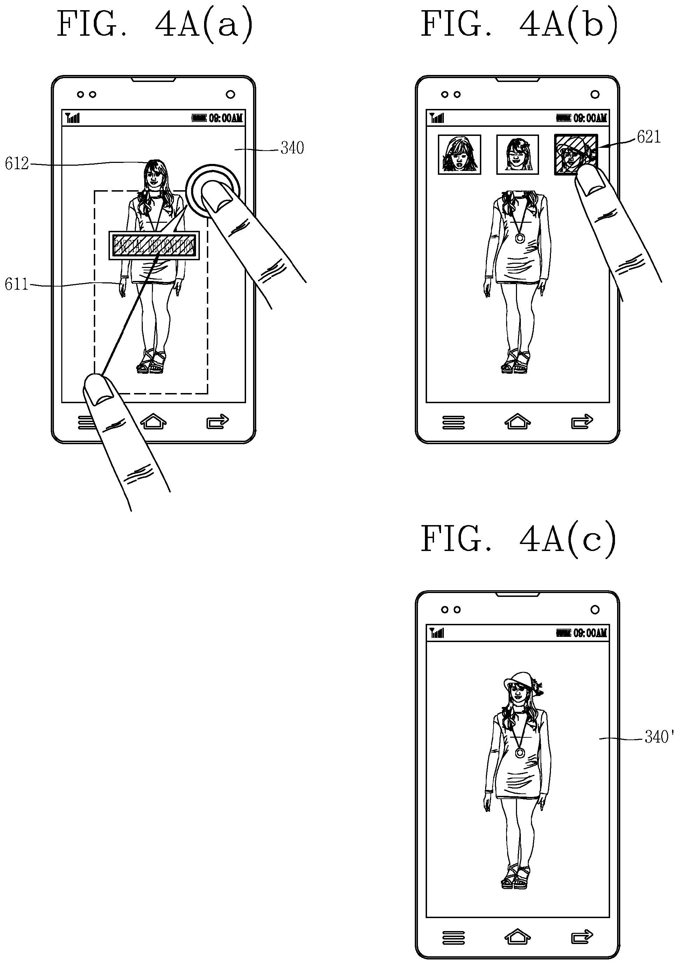

FIGS. 4A(a), 4A(b), 4A(c), 4B(a), 4B(b), 4B(c), 4C(a), 4C(b), 4C(c), 4D(a), 4D(b) and 4D(c) are conceptual views illustrating a control method of modularizing a solid object by a user.

Referring to FIGS. 4A(a) and 4A(b), a control method of modularizing the solid object based on a touch input applied to the display unit 151, and changing part of the module will be described. The controller 180 controls the display unit 151 to receive a touch input in a state that a fourth image 340 corresponding to the selected solid object is displayed. The controller 180 selects only a partial region of the solid object based on the touch input. Here, the touch input may correspond to a consecutive touch input for specifying a range on the image. Referring to FIG. 4A(a), when only a person's body portion excluding his or her face of the whole body is selected, the selected region and the remaining region are divided from each other to form a first and a second module 611, 612.

Furthermore, the display unit 151 displays only the selected first module 611, and limits the display of the guide portion 612. The controller 180 controls the display unit 151 to display a recommended image 621 to be displayed in place of the second module 612. The recommended image 621 may be stored in the memory 170 along with data for the 3D printing or received from a preset server. The controller 180 finds the category of the second module 612, and extracts the recommended image 621 classified as the same or similar category as the second module 612.

Referring to FIG. 4A(c), the controller 180 controls the display unit 151 to display a combined image 340' combined with the first module 611 for the recommended image 621. The controller 180 controls the wireless communication unit 110 to transmit data corresponding to the combined image 340' to the 3D printer 200.

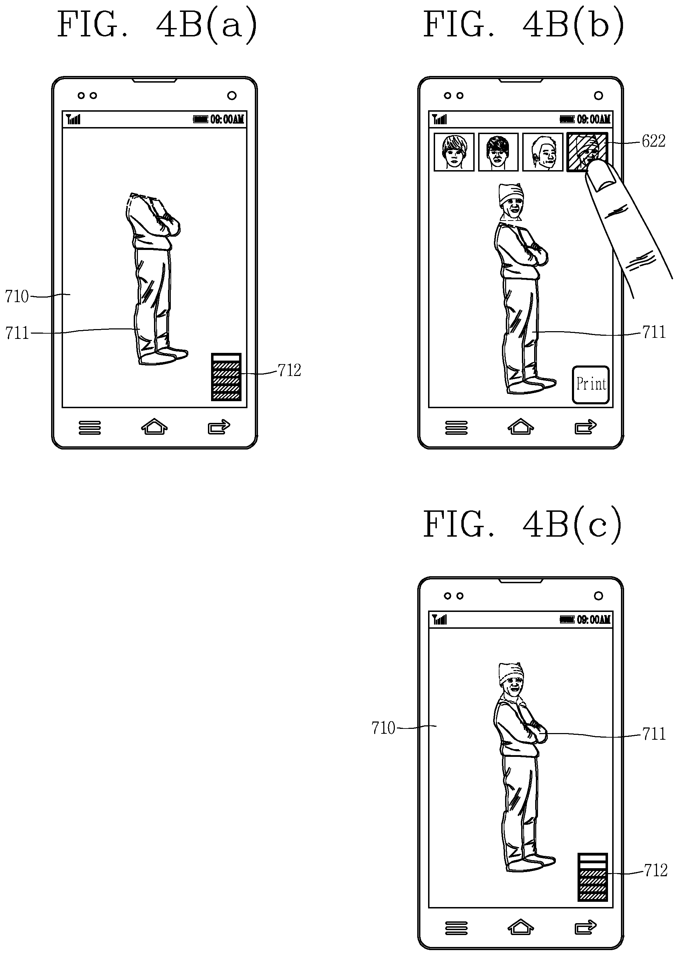

Referring to FIGS. 4B(a), 4B(b), 4B(c), a control method of adding a module to be printed while performing a print operation will be described. FIG. 4B(a) illustrates the display unit 151 for displaying first status information 710 indicating print status in which the solid object is printed. The first status information 710 displays a print status image 711 displayed with a print level. The controller 180 controls the display unit 151 to display a portion for which printing has been completed with a three-dimensional image and display a portion for which printing is expected with a two-dimensional image. As the printing progresses, the two-dimensional image is gradually converted to a three-dimensional image (a scene in which his or her head is being cut in FIGS. 4B(a), 4B(b) and 4B(c)).

Furthermore, the first status information 710 includes a print progress image 712 indicating a printed ratio of the whole solid object. Accordingly, the user may know which region has been printed and which level of printing has been completed through the print status image 711 and the print progress image 712.

Referring to FIG. 4B(b), the controller 180 may modularize the solid object based on a touch input applied to the print status image 711. For example, the controller 180 divides the print status image 711 into two modules based on a touch input applied to a 2D image region in which printing has not yet been carried out on the print status image 711. The controller 180 controls the display unit 151 to search and recommend a recommended image 622 in place of a region in which printing has not been carried out from two divided regions. A method of displaying the recommended image 622 is substantially the same as that of displaying the recommended image 621 in FIGS. 4A(a), 4A(b) and 4A(c), and thus the redundant description thereof will be omitted.

When the recommended image 622 is selected while the printing is carried out, the controller 180 controls the display unit 151 to combine the print status image 711 with the recommended image 622 to display the combined image.

In this case, the controller 180 transmits data containing the recommended image 622 to the 3D printer 200, and controls the display unit 151 to calculate the remaining amount of printing and modify the print progress image 712.

According to the present embodiment, the display unit 151 shows a state that a solid object is printed while performing a print operation. Furthermore, the user may modularize a region that has not yet been printed even when printing is carried out to change it to another shape.

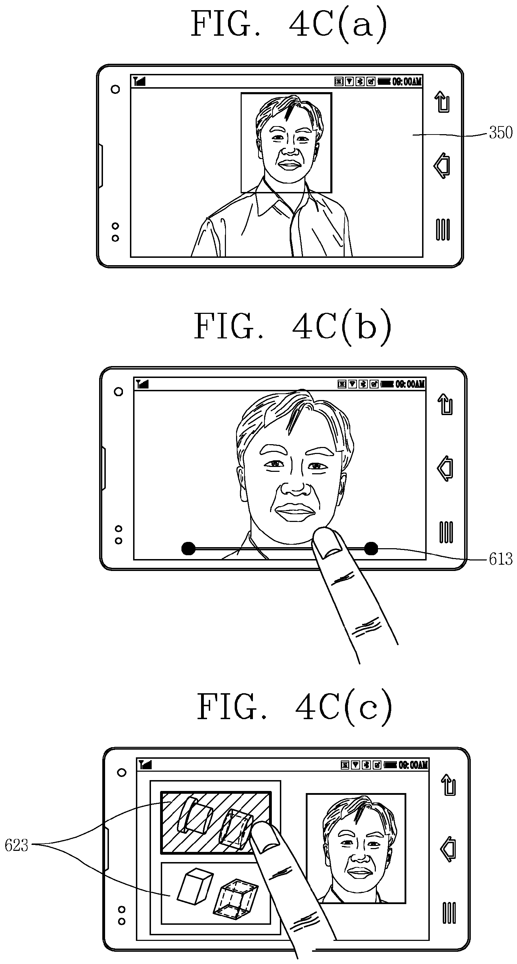

Referring to FIGS. 4C(a), 4C(b) and 4C(c), a control method for printing a connecting member that connects the module will be described. The display unit 151 displays a fifth image 350, and the controller 180 selects one module desired to print from the fifth image 350.

The controller 180 controls the display unit 151 to display a graphic image 613 receiving a touch input to display the module so as to connect the selected module along with the selected one module.

The controller 180 controls the display unit to display a connecting member 623 for connecting the selected module to another module based on a touch input applied to the graphic image 613.

The connecting member 623 may include a plurality of shapes that can be selected by a user. For example, when the selected module is a person's head, a connecting member for connecting it to the person's body may include a cylindrical type connecting member at which the body and head are formed to enable their rotation and a hexagonal type connecting member at which their rotation is disabled.

Though not shown in detail in the drawing, the controller 180 forms a control command to print the selected module along with the connecting member.

Accordingly, when a solid object is modularized at user's discretion, connecting members for connecting each module to one another may be displayed at once to select a connecting member suitable to the solid object.

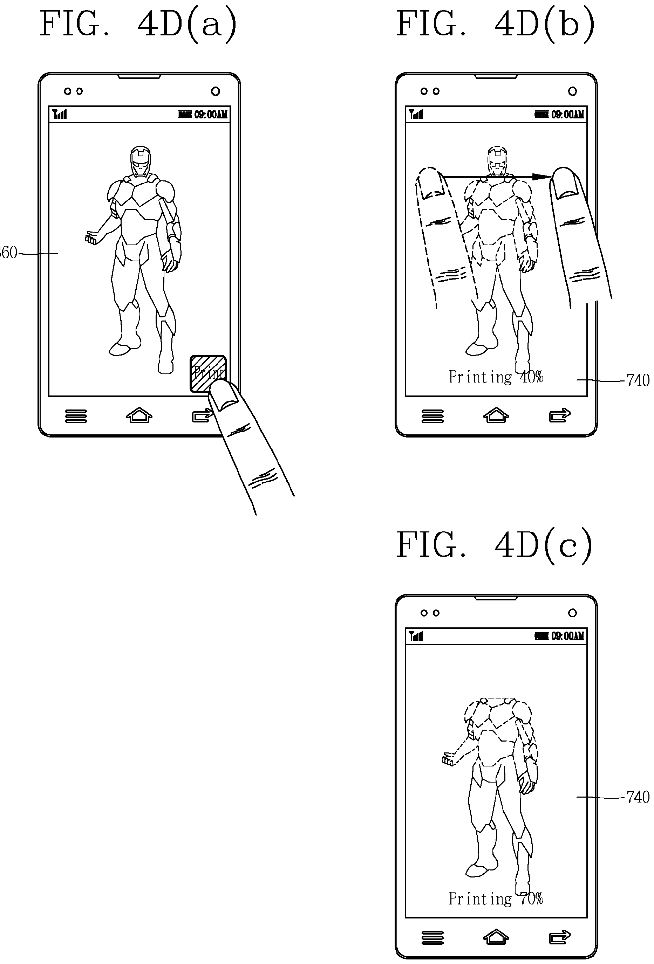

Referring to FIGS. 4D(a), 4D(b) and 4D(c), a control method of cancelling the printing of a module while performing a print operation will be described. the display unit 151 displays a sixth image 360 of the solid object, and the controller 180 forms a control command for starting the printing of the solid object contained in the sixth image 360 based on a user's control command.

Referring to FIG. 4D(b), the controller 180 controls the display unit 151 to display a fourth print status information 740 indicating the progress status of the printing while performing a print operation. The fourth print status information 740 displays a region in which an image of the solid object has been printed and a region in which printing has not yet been carried out in a divisive manner, and may include text (printing 40%) indicating the extent that printing has been carried out.

The controller 180 modularizes the solid object based on a touch input applied to the fourth print status information 740. For example, the touch input may form a boundary line for dividing the solid object into two regions. The controller 180 divides the solid object into two modules based on the touch input. The controller 180 controls the wireless communication unit to transmit the data of the solid object to the 3D printer so as to reconfigure the solid object with only the remaining region excluding a module for which printing has not been carried out based on the touch input.

Accordingly, the controller 180 may cancel the printing of one region of a solid object to be printed based on the touch input. The controller 180 may change text indicating the extent that the printing has been carried out based on the modified solid object and current print status.

In other words, the user may recognize a state of the solid object being printed while performing a print operation, and apply a touch input to limit the printing of a partial region thereof. In other words, the user may edit the solid object while being printed.

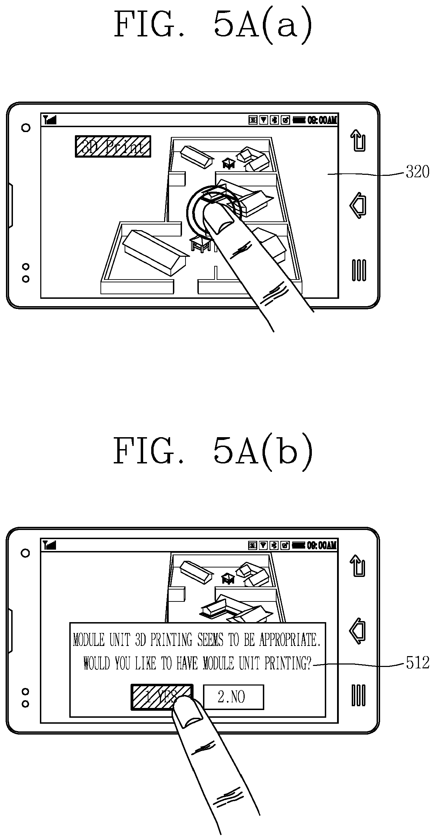

FIGS. 5A(a), 5A(b), 5B(a), 5B(b), 5B(c) and 5B(d) are conceptual views for explaining a control method of recommending a printing method.

FIG. 5A(a) displays the second image 320 including a plurality of modules. When a print control command is formed by the user, the controller 180 calculates a size of the second image 320, an amount of required material, a print time, and the like.

For example, when a time for displaying the whole second image 320 is calculated to be longer than a preset reference time, the controller 180 controls the display unit 151 to display a second select window 512 for proposing printing in the unit of module. When a control command for approving printing in the unit of module is applied, the controller 180 divides the solid object into a plurality of modules based on a preset criteria, and transmits the resultant data to the 3D printer 200. In this case, the preset criteria corresponds to a criteria capable of minimizing the print time.

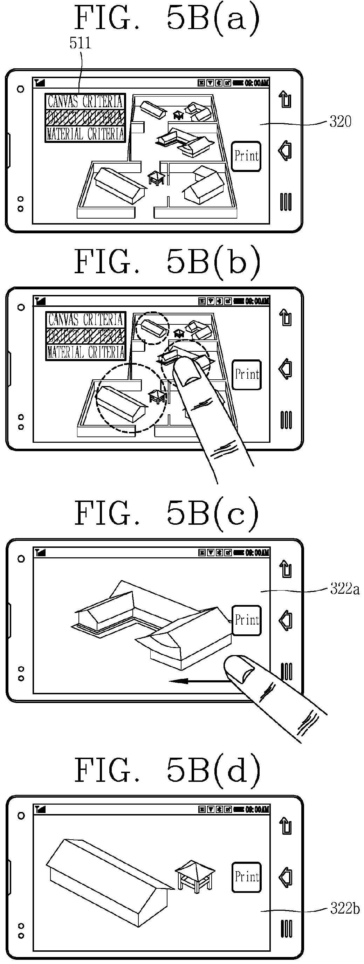

A control method of displaying divided modules will be described with reference to FIGS. 5B(a), 5B(b), 5B(c) and 5B(d). Referring to FIG. 5B(a), the controller 180 divides the solid object into a plurality of modules based on a criteria selected by the first select window 511. The controller 180 selects part of the plurality of modules based on a user's touch input.

The controller 180 controls the display unit 151 to display an image of the plurality of selected modules. In this case, the display unit 151 displays a first module image 322a including one of the plurality of modules. Furthermore, the controller 180 controls the display unit 151 to display a second module image 322b from the plurality of modules based on a specific type of touch input applied to the first module image 322a. In particular, when the plurality of selected modules are disposed to be separated from one another on the entire solid object, the controller 180 controls the display unit 151 to display the plurality of module images in an independent manner.

Here, the specific type of touch input may correspond to a consecutive touch input, for example, a dragging or flicking type of touch input.

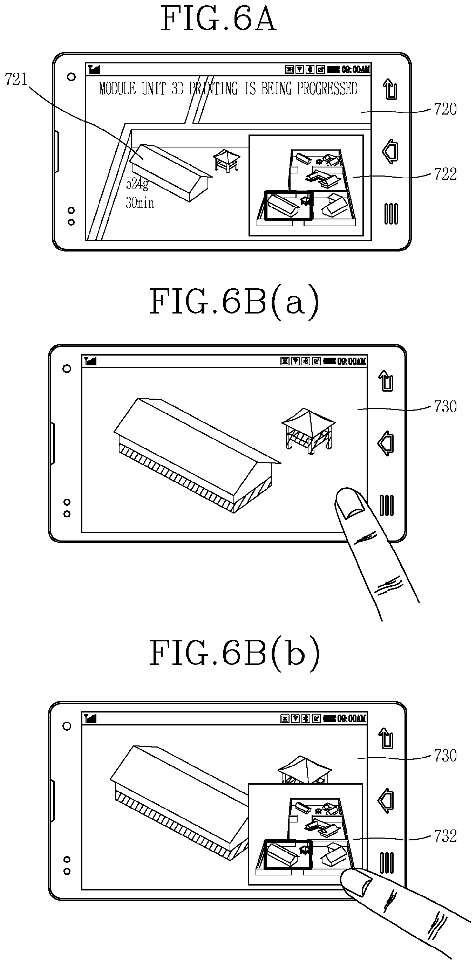

FIGS. 6A, 6B(a) and 6B(b) are conceptual views for explaining a control method of displaying print status being printed in the unit of module.

Referring to FIG. 6A, the controller 180 controls the display unit 151 to display second print status information 720. The print status information 720 controls the display unit 151 to display the print status image 721 of the solid object as an enlarged image of the solid object including a module currently being printed. The print status image 721 does not include information being printed, and is formed in a state that an image of the module selected by the user is enlarged.

Furthermore, the controller 180 controls the display unit 151 to display the entire image 722 of the solid object including the selected module on the print status image 721. The selected module is displayed on the entire image 722. In other words, visual information may be displayed or highlighted for the selected module on the entire image 722.

Accordingly, the user may check an image of the entire solid object including the selected module along with an image of the selected module currently being printed.

FIGS. 6B(a) and 6B(b) illustrate a control method of displaying the print status of the module according to another embodiment. Referring to FIG. 6B(a), the controller 180 controls the display unit 151 to display third print status information 730 indicating the print status of the selected module. For example, the third print status information 730 displays visual information to distinguish a region that has been printed from a region that has not yet been printed. For example, the controller 180 may control the display unit 151 to display a region that has been printed in a three-dimensional image and a region that has not yet been printed in a two-dimensional image on the third print status information 730. Here, the third print status information 730 may include only a module printed by a 3D printer and limit the display the other images. The third print status information 730 may form a three-dimensional virtual object with an augmented reality (AR) image using a photo of an actually captured solid object.

Referring to FIG. 6B(b), the controller 180 controls the display unit 151 to display the entire image 732 of the solid object based on a touch input applied to the third print status information 730. The entire image 732 may include an image of a printed module, and display the location of a module for which printing is carried out among the whole modules. Furthermore, the controller 180 may control the display unit 151 to highlight the printed module on the entire image 732.

When the touch input is released, the controller 180 may control the display unit 151 to limit the display of the entire image 732.

Accordingly, the user may check the print status of the currently displayed module, and selectively receive the entire image of the solid object including the displayed module.

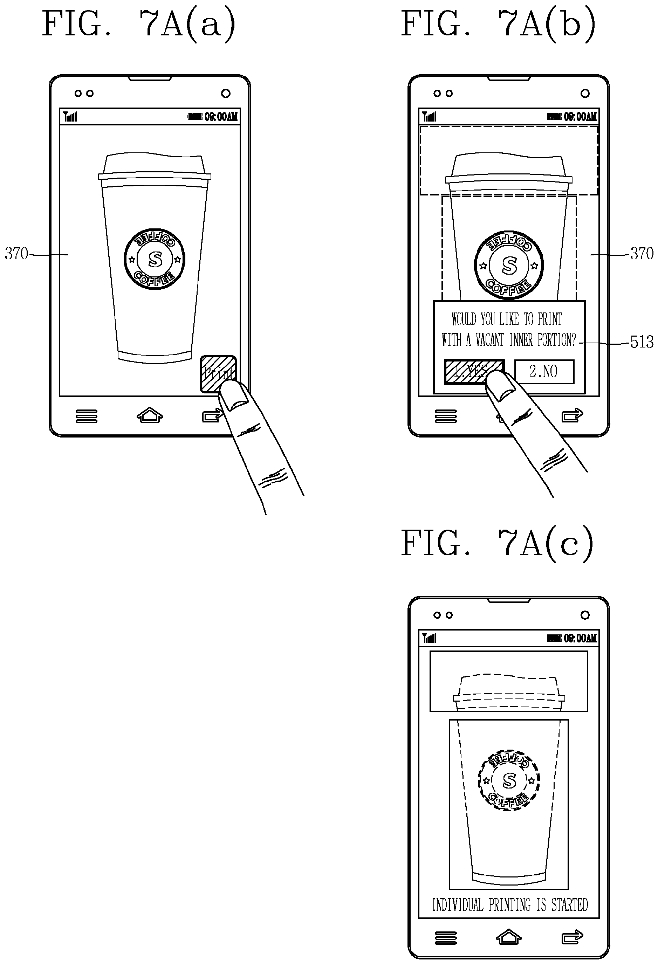

FIGS. 7A(a), 7A(b), 7A(c), 7B(a) and 7B(b) are conceptual views for explaining a control method of printing a solid object having an inner vacant space.

Referring to FIGS. 7A(a) and 7A(b), the display unit 151 displays a seventh image 370 indicating a solid object. For example, the solid object may correspond to a cup shape in which an inner space is formed to contain liquid and including a lid. When a solid object is specified, the controller 180 may know a function of the solid object. For example, when the cup is specified as a solid object, the controller 180 determines the need of an inner space according to the function of the cup.

When it is a solid object requiring an inner space according to the function, the controller 180 controls the display unit 151 to display a third select window 513 for checking whether or not to print with a vacant inner portion. When a user's control command is applied to display with a vacant inner portion, the controller 180 divides the solid object into a plurality of modules. For example, the controller 180 may divide the solid object into a cup and a lid.

The controller 180 forms a control command to individually display the plurality of divided modules. It is likely difficult to print a module such as a lid covering an inner space according to a printing method of the 3D printer. In this case, a solid object may be divided into a plurality of modules for printing to maintain its inner space.

A method of dividing the solid object into a plurality of modules may not be necessarily limited to this. For example, the solid object may be vertically divided in a state that the lid is covered on the cup to print each module.

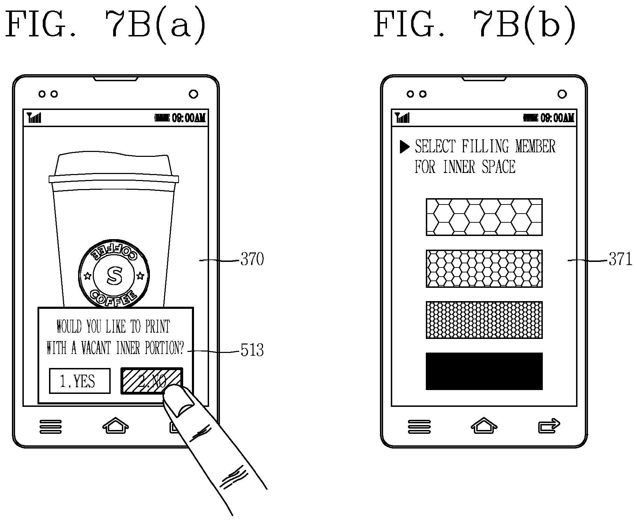

Referring to FIGS. 7B(a) and 7B(b), a control method of printing a solid object while filling an inner space will be described. When a control command for printing while filling an inner space is applied, the controller 180 controls the display unit 151 to display a filling member image 371 for selecting the filling member. For example, the filling member of the solid object may be formed with a mesh structure or printed with substantially the same material as that of the external structure. When the filling member is formed with a mesh structure, the user may select the precision and strength of the mesh structure.

Furthermore, though not shown in detail in the drawing, the controller 180 may form a control command for allowing the precision and strength of the mesh structure to be gradually changed to maintain the center of gravity for the structural stability of the solid object.

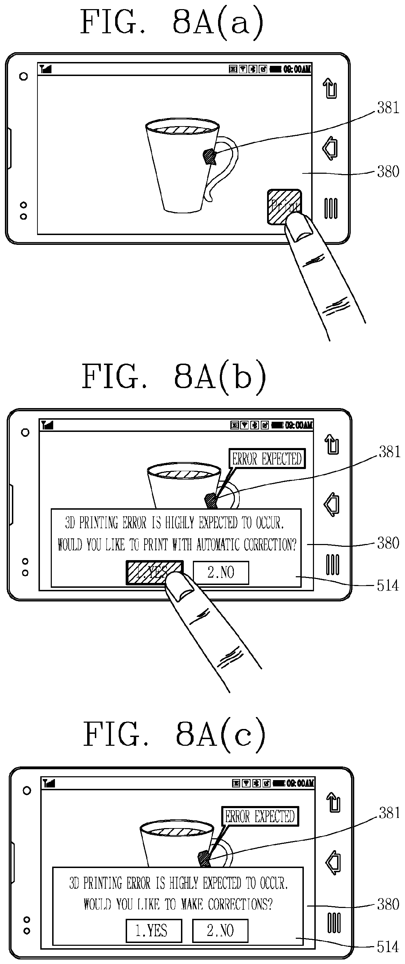

FIGS. 8A(a), 8A(b), 8A(c), 8B(a), 8B(b) and 8B(c) are conceptual views for explaining a control method of controlling the correction of an image used for printing. The display unit 151 displays an eighth image 380 of the solid object. The eighth image 380 may include an error region 381 that is likely to generate a printing error. For example, when the eighth image 380 corresponds to a photo that has captured an object, an edge of the object, a surface of the object or the like may not be captured in detail to generate the printing error when it is unable to calculate data for printing. For example, it denotes a case where one region thereof is out of focus or the surface of the solid object is not clearly expressed.

Referring to FIGS. 8A(a) and 8A(b), when the eighth image 380 containing the error region 381 is selected for printing, the controller 180 estimates the printing error to notify the user of it. For example, when the printing error is expected, the controller 180 controls the display unit 151 to display a fourth select window 514 for proposing the correction. For example, the fourth select window 514 asks the checking of whether to carry out the printing as it is or correct the error.

Referring to FIGS. 8A(a) and 8A(c), when the 381 is found, the controller 180 controls the display unit 151 to display the fourth select window 514 so as to check whether or not to recapture the image. For example, when the eighth image 380 is captured by the camera 121, the controller 180 controls the display unit 151 to display the fourth select window 514 receiving a touch input so as to control the recapture of the image. For example, it may correspond to a case where the eighth image 380 is out of focus or one region of the relevant solid object is hidden by another object.

In other words, when an image of the solid object is selected, the controller 180 extracts data for the printing of the solid object, but when accurate printing data of the solid object is not extracted while extracting the data, the controller 180 may control the display unit 151 to correct part of the image or recapture the image.

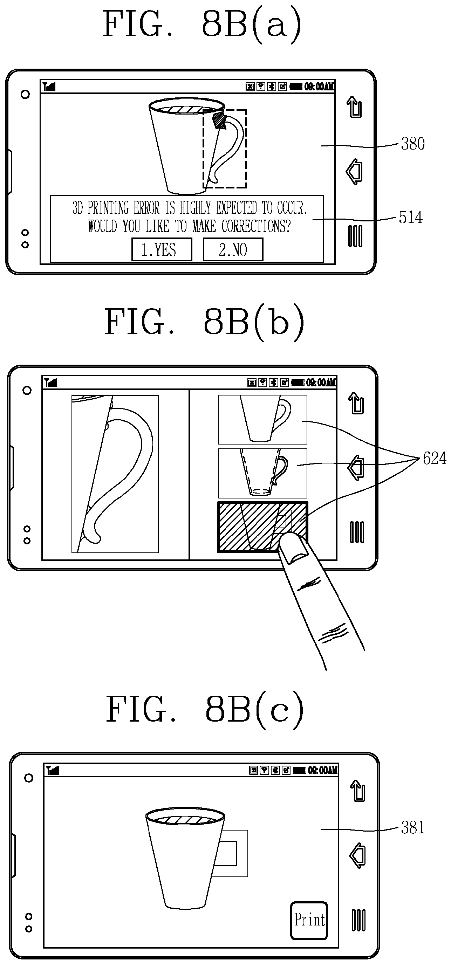

A control method of correcting part of the image will be described with reference to FIGS. 8B(a) and 8B(b). First, the controller 180 classifies a solid object contained in the eighth image 380 into a plurality of modules to detect an error region of the solid object contained in the eighth image 380. For example, it may correspond to an error region formed in a region connected to the plurality of modules, an error region formed on a structure required to perform a specific function when the solid object performs the function, and the like. Referring to FIG. 8B(a), the controller 180 divides a cup and a grip region into modules distinguished from each other, and detects an error region between the cup and grip regions. Here, the error region corresponds to a case where the image is unclear or data indicating the shape is unclear.

When the error region is sensed, the controller 180 controls the display unit 151 to display the fourth select window 514 for checking the correction of the error region. when a control command for the correction of the error region is applied, the controller 180 controls the display unit 151 to detect an alternative image 624 for replacing the error region and display the alternative image 624.

Here, the alternative image 624 corresponds to images to be combined with the remaining region of the eighth image 380 in place of an image including the error region. Referring to FIG. 8B(b), the alternative image 624 may include a plurality of images including one region connecting a cup and a grip portion.

When the alternative image 624 is selected, the controller 180 controls the display unit 151 to display a corrected image 381 in which the remaining region of the eighth image 380 is combined with the alternative image 624. Furthermore, the controller 180 forms a control command for printing the corrected image 381.

According to the present embodiment, there is provided a chance for estimating an error that is likely to occur in advance when printing is carried out using data contained in an image and correct a printing error. Furthermore, alternative images for correcting the printing error may be provided and thus the user may not be required to search an image for correction, thereby printing a more accurate solid object.

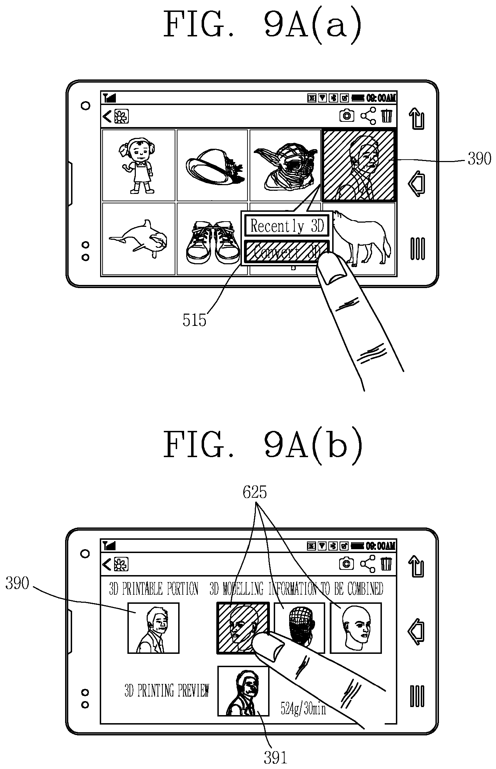

FIGS. 9A(a), 9A(b), 9B(a), 9B(b), 9B(c), 9C(a), 9C(b) through 9C(c) are conceptual views for explaining a control method of printing a 2D image as a solid object.

A control method of printing a 2D image as a solid object will be described with reference to FIGS. 9A(a) and 9A(b). Referring to FIG. 9A(a), one (a ninth image 390) of a plurality of images displayed on the display unit 151 is selected. When the ninth image 390 is selected, the controller 180 controls the display unit 151 to display a fifth select window 515 for printing a solid object using the ninth image 390. The fifth select window 515 may include a selection item for whether to print a recently printed solid object or convert the ninth image 390 to a 3D solid object using the ninth image 390.

In other words, when a solid object is printed using a 2D image, the controller 180 may control the memory 170 to store the data of the solid object that has been applied to the 2D image along with the 2D image.

When a control command for converting the ninth image 390 to a 3D solid object is applied, the controller 180 controls the display unit 151 to display 3D modelling information 625 along with the ninth image 390. The 3D modelling information 625 may include shape data to be combined with the ninth image 390, thereby allowing the ninth image 390 to have a 3D shape. For example, when the ninth image 390 corresponds to a person's face photo, the 3D modelling information 625 may include head data to put on the face photo.

When any one of the plurality of 3D modelling information 625 is selected, the controller 180 controls the display unit 151 to display a 3D image 391 formed by combining the selected 3D modelling information with the ninth image 390. Furthermore, the display unit 151 may display print information such as an amount of printing material, a print time and the like for printing the formed 3D image 391.

Accordingly, the user may form a solid object including a two-dimensional image by combining modelling information with the two-dimensional image as well as an image including printing data for printing the solid object.

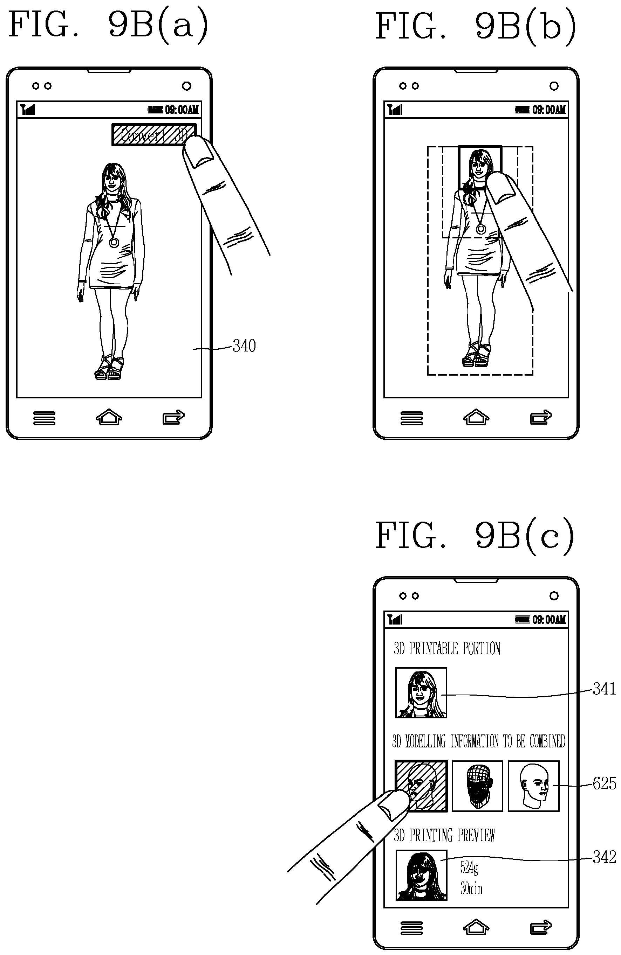

Referring to FIGS. 9B(a), 9B(b) and 9B(c), a control method of partially printing a 2D image as a solid object will be described. Referring to FIGS. 9B(a) and 9B(b), when a control command for converting a 2D image to a 3D solid object is applied, the controller 180 controls the display unit 151 to modularize the 2D image 340 and display it in a partially divided manner. In other words, the controller 180 may divide a 2D image into a region that can be displayed as one solid object.

When one region 341 of the 2D image is selected, the controller 180 controls the display unit 151 to display 3D modelling information 625 applicable to the selected region. The controller 180 controls the display unit 151 to display the 3D image 342 of the one region 341 applied to the 3D modelling information 625.

The controller 180 may form a control command for printing one region selected from the 2D image as a 3D solid object, but may not be necessarily limited to this. Though not shown in detail in the drawing, the remaining region excluding one region selected as a 3D solid object may be printed as a relief-like shape. In this case, the print direction of the 3D solid object may be preferably printed from a rear surface thereof when a 2D image is set to a front surface by the remaining region of the 2D image.

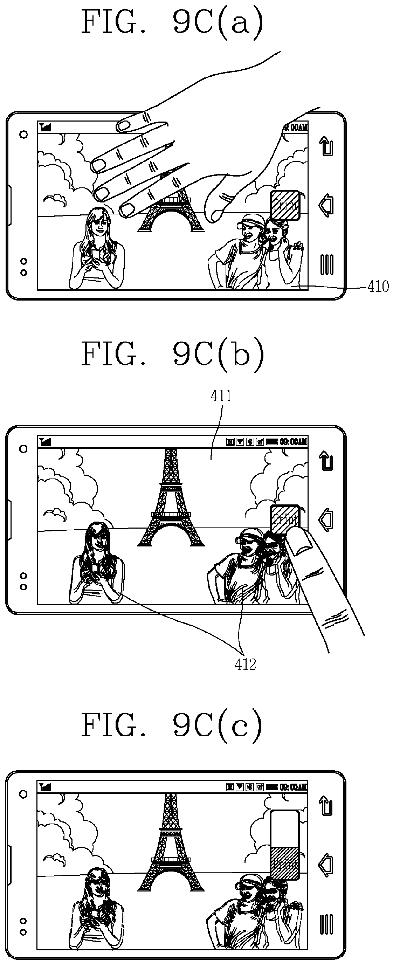

Referring to FIGS. 9C(a), 9C(b) through 9C(c), a control method of setting a region to be printed as a 3D solid object based on a touch input will be described. FIG. 9C(a) illustrates the display unit 151 for displaying the first screen information 410. The controller 180 may divide a plurality of images contained in the first screen information 410 into a plurality of modules. For example, the controller 180 may divide them into 3 persons, a building, a background, and the like, and divide them into regions that can be conceptually divided by the user.

The controller 180 may divide the plurality of modules into a module to be printed as a 3D solid object and the remaining module based on a touch input applied to the first screen information 410. For example, the touch input may correspond to a multi-touch for applying a plurality of touch inputs to the first screen information 410, and it may be applied by a user's several fingers and his or her palm.

The controller 180 may control the display unit 151 to display a first module 411 to at least one region of which a touch input is applied as a two-dimensional image and a second module 412 to which a touch input is not applied as a three-dimensional image.

The controller 180 controls the display unit 151 to display the second module 412 as a 3D solid object based on a print control command. The controller 180 may form a control command not to print the graphic image 411 or print it in a relief shape.

According to the present embodiment, an image including a plurality of contents may be modularized to display only part of the plurality of modules as a solid object. Accordingly, the user may not be required to apply an additional control command to distinguish content to be printed as a solid object.

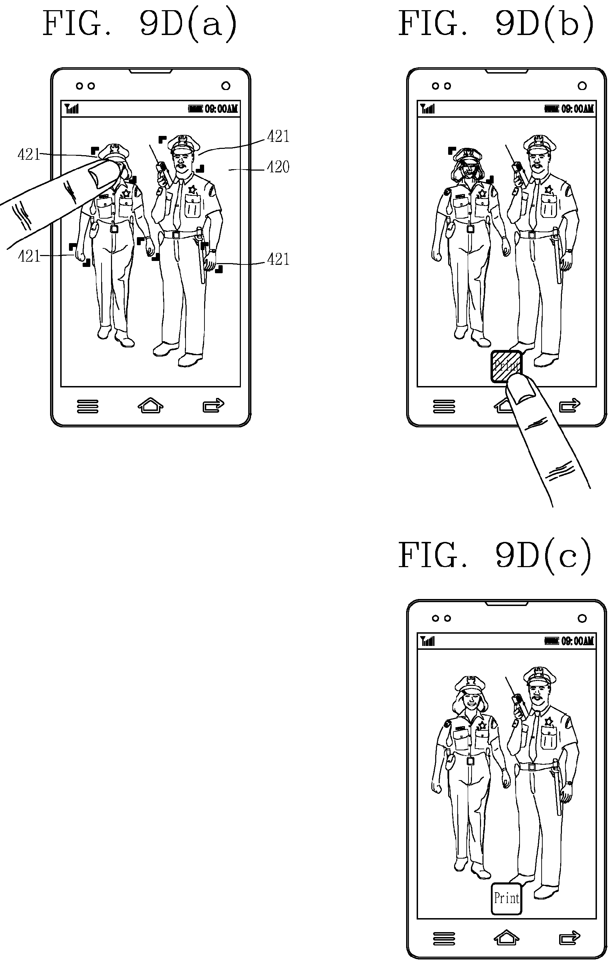

A control method of providing divided modules for printing conveniences will be described with reference to FIGS. 9D(a), 9D(b) and 9D(c). The display unit 151 displays second screen information 420, and the controller 180 divides the second screen information 420 into a plurality of modules for printing conveniences. Here, modularization for printing conveniences may be carried out based on a boundary when a depth change, a color change or a frequency change per unit area is greater than a preset reference.

The controller 180 controls the display unit 151 to modularize the second screen information 420 based on the reference and display a recommended module 421 for printing it as a solid object. The recommended module may correspond to a case where the quality of a solid object is greater than a preset condition based on the analyzed depth, color and frequency per unit area. The quality may be determined by the display function and material of the 3D printer due to the function and driving condition of the 3D printer. In other words, the memory can store the driving condition of the 3D printer.

The controller 180 may form a control command to perform a print operation on at least one module selected from the recommended modules.

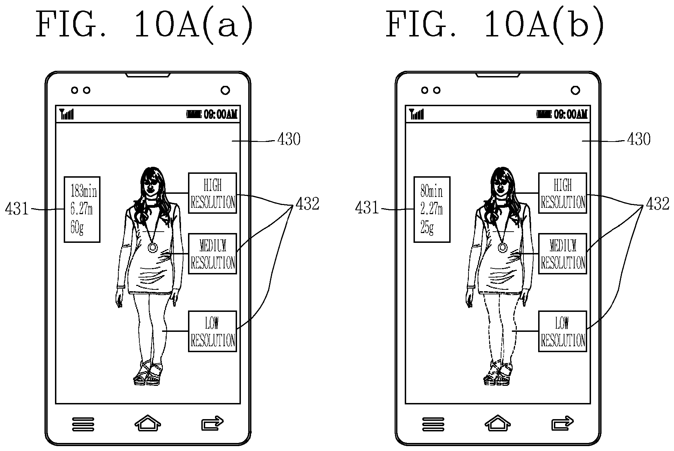

FIGS. 10A(a), 10A(b), 10B(a) and 10B(b) are conceptual views for explaining a control method of changing an output condition.

Referring to FIG. 10A, a control method of adjusting the resolution of a solid object will be described. The display unit 151 displays a third image 430. The controller 180 divides the third image information 430 into a plurality of modules, and controls the display unit 151 to calculate a print time, a height of the solid object, a weight of the solid object and the like for printing the solid object of the third image information 430 to display print information 431. The controller 180 displays a first graphic image 432 for selecting a resolution corresponding to the plurality of modules, respectively.

The controller 180 may adjust the resolution of each module based on a user's touch input applied to the first graphic image. Furthermore, the controller 180 may display a visual effect on the image according to the resolution change. For example, the controller 180 may form a control command to display a face portion, a body portion and a leg portion as a high resolution, a medium resolution and a low resolution, respectively.

According to the present embodiment, the user may selectively control the resolution of a portion considered to be important or a portion requiring detailed expression.

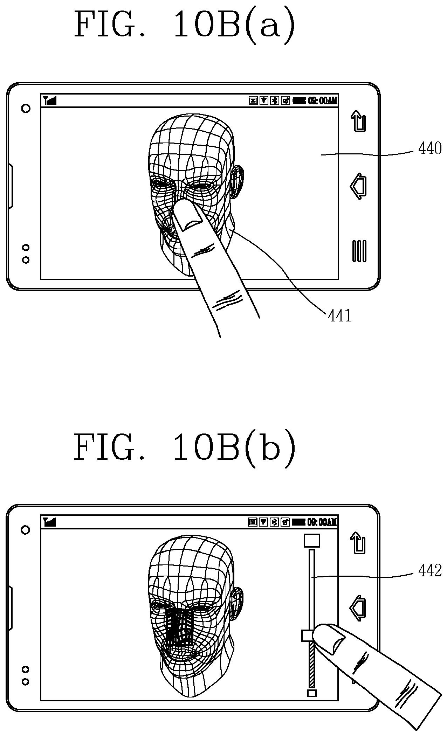

Referring to FIGS. 10B(a) and 10B(b), a control method of modifying part of the solid object will be described.

The controller 180 display fourth screen information 440 indicating the shape of a solid object. The controller 180 may divides a solid object contained in the fourth screen information 440 into a plurality of modules based on a preset criteria. The controller 180 selects one of the plurality of modules based on a touch input applied to the fourth screen information 440.

When one module is selected, the controller 180 controls the display unit 151 to display a control bar 442 for modifying the shape of the module. Though one control bar 442 is displayed on the drawing, the present disclosure may not be necessarily limited to this, and a plurality of control bars may be concurrently or selectively displayed.

The controller 180 controls the display unit 151 to modify and display the selected shape based on a touch input applied to the control bar 442. For example, when a nose portion of the face shape is selected, the controller 180 may adjust the height/width of the nose to be increased or decreased based on a touch input applied to the control bar 442.

In other words, the user may adjust the shape of the modularized solid object for each module, thereby printing a more precise shape.

The foregoing present invention may be implemented as codes readable by a computer on a medium written by the program. The computer-readable media may include all kinds of recording devices in which data readable by a computer system is stored. Examples of the computer-readable media may include hard disk drive (HDD), solid state disk (SSD), silicon disk drive (SDD), ROM, RAM, CD-ROM, magnetic tape, floppy disk, and optical data storage device, and the like, and also include a device implemented in the form of a carrier wave (for example, transmission via the Internet). In addition, the computer may include the controller 180 of the mobile terminal. Accordingly, the detailed description thereof should not be construed as restrictive in all aspects but considered as illustrative. The scope of the invention should be determined by reasonable interpretation of the appended claims

## Claims

1. A mobile terminal (100), comprising:
a wireless communication unit (110) configured to perform wireless communication with a 3D printer (200) configured to print solid objects;
a touch screen including a display (151);
one or a plurality of cameras (121), and
a controller (180) configured to:
cause the display (151) to display an image including at least a part of a plurality of modules, the plurality of modules being formed to represent respective portions of a target object according to preset criteria, wherein the image corresponds to a photo that has captured the target obj ect;
detect an error region of the target object contained in the image (380), wherein the error region is formed in a region connected to a plurality of modules and corresponds to a case where the image is out of focus or one region of the relevant solid object is hidden by another object,
cause the display (151) to display a select window (514) for receiving a control command for the correction of the error region,
cause the display (151) to display an alternative image (624) for replacing the error region, wherein the alternative image (624) corresponds to images to be combined with the remaining region of the image (380) in place of an image including the error region,
cause the display (151) to display a corrected image (381) in which the remaining region of the image (380) is combined with the alternative image (624); and
transmit, via the wireless communication unit (110), a control signal to the 3D printer (200), wherein the control signal includes data relating to a selected module of the plurality of modules to enable the 3D printer to print the selected module as a solid object that forms a portion of the target object

2. The mobile terminal of claim 1,
wherein the plurality of modules are a plurality of physically separated modules, and
wherein the controller (180) is further configured to:
receive a touch input corresponding to any of the plurality of modules to select the selected module
partition the target object into the plurality of modules based on a touch input applied to the displayed image.

3. The mobile terminal of claim 1, wherein the controller is further configured to:
cause the display (151) to display an image for selecting a connecting member that connects the plurality of modules.

4. The mobile terminal of one of any claims 1 to 3, wherein the preset criteria corresponds to any one of a material of the target object, a printable capacity of the 3D printer, or a structure of the target object, and
wherein the controller (180) is further configured to cause the display to display a selection window for selecting any one of the material of the target object, the printable capacity of the 3D printer, or the structure of the target object along with the image.

5. The mobile terminal of claim 4, wherein the preset criteria corresponds to the printable capacity of the 3D printer, and
wherein the controller (180) is further configured to:
cause the display (151) to display an image corresponding to the printable capacity of the 3D printer; and
move the image corresponding to the printable capacity of the 3D printer based on a touch input applied to the display to select a print region of the target object.

6. The mobile terminal of one of any claims 1 to 5, wherein the controller (180) is further configured to:
cause the display (151) to display the selected module while the 3D printer is performing the printing of the selected module; and
cause the display (151) to display an image of the target object and an image of the selected module.

7. The mobile terminal of claim 6, wherein when all of the plurality of modules are selected, the controller (180) is further configured to:
cause the display (151) to sequentially display a plurality of module images respectively corresponding to one of the plurality of modules.

8. The mobile terminal of claim 1, wherein the controller is further configured to:
analyse a function of the target object, wherein the preset criteria is formed based on the function wherein when the target object contains an inner space, the controller is further configured to:
partition the target object into a plurality of modules to enable printing of an object that includes the inner space.

9. The mobile terminal of one of any claims 1 to 8, wherein the controller (180) is further configured to:
cause the display (151) to display a recommended image (621) containing a same type of module as that of the remaining module that is not the selected module from the plurality of modules.

10. The mobile terminal of one of any claims 1 to 8, wherein when the image corresponds to a 2D image, the controller (180) is further configured to:
cause the display (151) to display 3D modelling information to be combined with the 2D image.

11. The mobile terminal of claims 1 to 9, wherein the controller (180) is further configured to:
cause the display (151) to display 3D modelling information to be combined with one region of the image based on a user input; and
cause the 3D printer to print the remaining region of the image as a relief.

12. The mobile terminal of claim 1, wherein the controller is further configured to:
cause the display (151) to display an image corresponding to each of the plurality of modules;
receive a touch input to adjust a resolution of the image corresponding to each of the plurality of modules; and
cause the display (151) to display a control bar for modifying shape of any one module of the plurality of modules based on a touch applied to the one module.

13. A printing method, comprising:
performing wireless communication with a 3D printer (200) configured to print solid objects;
displaying, on a display (151)of a touch screen, a photo captured a target object by means of one or a plurality of cameras (121)and including at least a part of a plurality of modules, the plurality of modules being formed to represent respective portions of a target object according to preset criteria;
detecting an error region of the target object contained in the image (380), wherein the error region is formed in a region connected to a plurality of modules and corresponds to a case where the image is out of focus or one region of the relevant solid object is hidden by another object,
cause the display (151) to display a select window (514) receiving a control command for the correction of the error region, displaying an alternative image (624) for replacing the error region, wherein the alternative image (624) corresponds to images to be combined with the remaining region of the image (380) in place of an image including the error region,
displaying a corrected image (381) in which the remaining region of the image (380) is combined with the alternative image (624); and
transmitting, via a wireless communication unit (110), a control signal to the 3D printer (200), wherein the control signal includes data relating to a selected module of the plurality of modules to enable the 3D printer (200) to print the selected module as a solid object that forms a portion of the target object.

## Patentansprüche

1. Mobiles Endgerät (100), das Folgendes umfasst:
eine drahtlose Kommunikationseinheit (110), die konfiguriert ist, eine drahtlose Kommunikation mit einem 3D-Drucker (200), der konfiguriert ist, Festkörperobjekte zu drucken, auszuführen;
einen Berührungsbildschirm, der eine Anzeige (151) enthält;
eine oder mehrere Kameras (121) und
eine Steuereinheit (180), die konfiguriert ist zum:
Bewirken, dass die Anzeige (151) ein Bild anzeigt, das zumindest einen Teil von mehreren Modulen enthält, wobei die mehreren Module so gebildet sind, dass sie jeweilige Teile eines Zielobjektes gemäß voreingestellten Kriterien repräsentieren, wobei das Bild einem Foto entspricht, das das Zielobjekt erfasst hat;
Detektieren eines Fehlerbereichs des Zielobjektes, der in dem Bild (380) enthalten ist, wobei der Fehlerbereich in einem Bereich gebildet ist, der mit mehreren Modulen verbunden ist und einem Fall entspricht, in dem das Bild unscharf ist oder ein Bereich des fraglichen Festkörperobjektes durch ein anderes Objekt verdeckt wird,
Bewirken, dass die Anzeige (151) ein Auswahlfenster (514) zum Empfangen eines Steuerbefehls für die Korrektur des Fehlerbereichs anzeigt,
Bewirken, dass die Anzeige (151) ein alternatives Bild (624) zum Ersetzen des Fehlerbereichs anzeigt, wobei das alternative Bild (624) Bildern entspricht, die mit dem übrigen Bereich des Bildes (380) anstelle eines Bildes, das den Fehlerbereich enthält, zu vereinigen sind,
Bewirken, dass die Anzeige (151) ein korrigiertes Bild (381) anzeigt, in dem der übrige Bereich des Bildes (380) mit dem alternativen Bild (624) vereinigt ist; und
Senden über die drahtlose Kommunikationseinheit (110) eines Steuersignals an den 3D-Drucker (200), wobei das Steuersignal Daten enthält, die sich auf ein ausgewähltes Modul der mehreren Module beziehen, um dem 3D-Drucker zu ermöglichen, das ausgewählte Modul als ein Festkörperobjekt zu drucken, das einen Teil des Zielobjektes bildet.

2. Mobiles Endgerät nach Anspruch 1,
wobei die mehreren Module mehrere physikalisch getrennte Module sind und
wobei die Steuereinheit (180) ferner konfiguriert ist zum:
Empfangen einer Berührungseingabe, die einem der mehreren Module entspricht, um das ausgewählte Modul auszuwählen,
Unterteilen des Ziel Objektes in die mehreren Module anhand einer auf das angezeigte Bild ausgeübten Berührungseingabe.

3. Mobiles Endgerät nach Anspruch 1, wobei die Steuereinheit ferner konfiguriert ist zum:
Bewirken, dass die Anzeige (151) ein Bild anzeigt, um ein Verbindungselement, das die mehreren Module verbindet, auszuwählen.

4. Mobiles Endgerät nach einem der Ansprüche 1 bis 3, wobei die voreingestellten Kriterien einem Material des Zielobjektes oder einer druckbaren Kapazität des 3D-Druckers oder einer Struktur des Zielobjektes entsprechen und
wobei die Steuereinheit (180) ferner konfiguriert ist, zu bewirken, dass die Anzeige ein Auswahlfenster anzeigt, um das Material des Zielobjekts oder die druckbare Kapazität des 3D-Druckers oder die Struktur des Zielobjektes zusammen mit dem Bild auszuwählen.

5. Mobiles Endgerät nach Anspruch 4, wobei die voreingestellten Kriterien der druckbaren Kapazität des 3D-Druckers entsprechen und
wobei die Steuereinheit (180) ferner konfiguriert ist zum:
Bewirken, dass die Anzeige (151) ein Bild anzeigt, das der druckbaren Kapazität des 3D-Druckers entspricht; und
Bewegen des Bildes, das der druckbaren Kapazität des 3D-Druckers entspricht, anhand einer Berührungseingabe, die auf die Anzeige ausgeübt wird, um einen Druckbereich des Zielobjektes auszuwählen.

6. Mobiles Endgerät nach einem der Ansprüche 1 bis 5, wobei die Steuereinheit (180) ferner konfiguriert ist zum:
Bewirken, dass die Anzeige (151) das ausgewählte Modul anzeigt, während der 3D-Drucker das Drucken des ausgewählten Moduls ausführt; und
Bewirken, dass die Anzeige (151) ein Bild des Zielobjektes und ein Bild des ausgewählten Moduls anzeigt.

7. Mobiles Endgerät nach Anspruch 6, wobei dann, wenn alle der mehreren Module ausgewählt sind, die Steuereinheit (180) ferner konfiguriert ist zum:
Bewirken, dass die Anzeige (151) nacheinander mehrere Modulbilder anzeigt, die jeweils einem der mehreren Modulen entsprechen.

8. Mobiles Endgerät nach Anspruch 1, wobei die Steuereinheit ferner konfiguriert ist zum:
Analysieren einer Funktion des Zielobjektes, wobei die voreingestellten Kriterien anhand der Funktion gebildet sind, wobei dann, wenn das Zielobjekt einen inneren Raum enthält, die Steuereinheit ferner konfiguriert ist zum:
Unterteilen des Ziel Objektes in mehrere Module, um ein Drucken eines Objektes, das den inneren Raum enthält, zu ermöglichen.

9. Mobiles Endgerät nach einem der Ansprüche 1 bis 8, wobei die Steuereinheit (180) ferner konfiguriert ist zum:
Bewirken, dass die Anzeige (151) ein empfohlenes Bild (621) anzeigt, das denselben Typ von Modul wie den des übrigen Moduls, das nicht das ausgewählte Modul aus den mehreren Modulen ist, enthält.

10. Mobiles Endgerät nach einem der Ansprüche 1 bis 8, wobei dann, wenn das Bild einem 2D-Bild entspricht, die Steuereinheit (180) ferner konfiguriert ist zum:
Bewirken, dass die Anzeige (151) 3D-Modellierinformationen anzeigt, die mit dem 2D-Bild zu vereinigen sind.

11. Mobiles Endgerät nach den Ansprüchen 1 bis 9,
wobei die Steuereinheit (180) ferner konfiguriert ist zum:
Bewirken, dass die Anzeige (151) 3D-Modellierinformationen anzeigt, die mit einem Bereich des Bildes anhand einer Anwendereingabe zu vereinigen sind; und
Bewirken, dass der 3D-Drucker den übrigen Bereich des Bildes als ein Relief druckt.

12. Mobiles Endgerät nach Anspruch 1, wobei die Steuereinheit ferner konfiguriert ist zum:
Bewirken, dass die Anzeige (151) ein Bild anzeigt, das jedem der mehreren Module entspricht;
Empfangen einer Berührungseingabe, um eine Auflösung des Bildes, das jedem der mehreren Module entspricht, anzupassen; und
Bewirken, dass die Anzeige (151) einen Steuerbalken anzeigt, um eine Form eines der Module der mehreren Module anhand einer Berührung, die auf das eine Modul ausgeübt wird, zu ändern.

13. Druckverfahren, das Folgendes umfasst:
Ausführen einer drahtlosen Kommunikation mit einem 3D-Drucker (200), der konfiguriert ist, Festkörperobjekte zu drucken;
Anzeigen auf einer Anzeige (151) eines Berührungsbildschirms eines Fotos, das mit Hilfe einer oder mehrerer Kameras (121) ein Zielobjekt erfasst hat, und mindestens einen Teil mehrerer Module enthält, wobei die mehreren Module so gebildet sind, dass sie jeweilige Teile des Ziel Objektes gemäß voreingestellter Kriterien repräsentieren;
Detektieren eines Fehlerbereichs des Zielobjektes, der in dem Bild (380) enthalten ist, wobei der Fehlerbereich in einem Bereich gebildet ist, der mit mehreren Modulen verbunden ist und einem Fall entspricht, in dem das Bild unscharf ist oder ein Bereich des fraglichen Festkörperobjektes durch ein anderes Objekt verdeckt wird,
Bewirken, dass die Anzeige (151) ein Auswahlfenster (514) anzeigt, das einen Steuerbefehl für die Korrektur des Fehlerbereichs empfängt, Anzeigen eines alternativen Bildes (624), um den Fehlerbereich zu ersetzen, wobei das alternative Bild (624) Bildern entspricht, die mit dem übrigen Bereich des Bildes (380) anstelle eines Bildes, das den Fehlerbereich enthält, zu vereinigen sind,
Anzeigen eines korrigierten Bildes (381), in dem der übrige Bereich des Bildes (380) mit dem alternativen Bild (624) vereinigt ist; und
Senden über eine drahtlose Kommunikationseinheit (110) eines Steuersignals an den 3D-Drucker (200), wobei das Steuersignal Daten bezüglich eines ausgewählten Moduls der mehreren Module enthält, um dem 3D-Drucker (200) zu ermöglichen, das ausgewählte Modul als ein Festkörperobjekt zu drucken, das einen Teil des Ziel Objektes bildet.

## Revendications

1. Terminal mobile (100), comportant :
une unité de communication sans fil (110) configurée pour réaliser une communication sans fil avec une imprimante 3D (200) configurée pour imprimer des objets solides ;
un écran tactile incluant un affichage (151) ;
un appareil ou une pluralité d'appareils de prise de vues (121), et
une commande (180) configurée pour :
amener l'affichage (151) à afficher une image incluant au moins une partie d'une pluralité de modules, la pluralité de modules étant formée pour représenter des portions respectives d'un objet cible d'après un critère prédéfini, dans lequel l'image correspond à une photographie qui a capturé l'objet cible ;
détecter une zone d'erreur de l'objet cible contenu dans l'image (380), dans lequel la zone d'erreur est formée dans une zone associée à une pluralité de modules et correspond à un cas où l'image est hors foyer ou une zone de l'objet solide concerné est cachée par un autre objet,
amener l'affichage (151) à afficher une fenêtre de sélection (514) pour recevoir une instruction de commande pour la correction de la zone d'erreur,
amener l'affichage (151) à afficher une image alternative (624) pour remplacer la zone d'erreur, dans lequel l'image alternative (624) correspond à des images devant être combinées avec la zone restante de l'image (380) à la place d'une image incluant la zone d'erreur,
amener l'affichage (151) à afficher une image corrigée (381), dans lequel la zone restante de l'image (380) est combinée avec l'image alternative (624) ; et
transmettre, via l'unité de communication sans fil (110), un signal de commande à l'imprimante 3D (200), dans lequel le signal de commande inclut des données liées à un module sélectionné parmi la pluralité de modules pour permettre à l'imprimante 3D d'imprimer le module sélectionné comme un objet solide qui forme une portion de l'objet cible.

2. Terminal mobile selon la revendication 1,
dans lequel les modules de la pluralité de modules sont une pluralité de modules physiquement séparés, et
dans lequel la commande (180) est en outre configurée pour :
recevoir une entrée tactile correspondant à un module quelconque parmi la pluralité de modules pour sélectionner le module sélectionné
segmenter l'objet cible pour obtenir la pluralité de modules sur la base d'une entrée tactile appliquée à l'image affichée.

3. Terminal mobile selon la revendication 1, dans lequel la commande est en outre configurée pour :
amener l'affichage (151) à afficher une image pour sélectionner un élément de liaison qui relie la pluralité de modules.

4. Terminal mobile selon l'une quelconque des revendications 1 à 3, dans lequel le critère prédéfini correspond à un critère quelconque parmi une matière de l'objet cible, une capacité d'impression de l'imprimante 3D ou une structure de l'objet cible, et
dans lequel la commande (180) est en outre configurée pour amener l'affichage à afficher une fenêtre de sélection pour sélectionner un critère quelconque parmi la matière de l'objet cible, la capacité d'impression de l'imprimante 3D ou la structure de l'objet cible de même que l'image.

5. Terminal mobile selon la revendication 4, dans lequel le critère prédéfini correspond à la capacité d'impression de l'imprimante 3D, et
dans lequel la commande (180) est en outre configurée pour :
amener l'affichage (151) à afficher une image correspondant à la capacité d'impression de l'imprimante 3D ; et
déplacer l'image correspondant à la capacité d'impression de l'imprimante 3D sur la base d'une entrée tactile appliquée à l'affichage pour sélectionner une zone d'impression de l'objet cible.

6. Terminal mobile selon l'une quelconque des revendications 1 à 5, dans lequel la commande (180) est en outre configurée pour :
amener l'affichage (151) à afficher le module sélectionné lorsque l'imprimante 3D réalise l'impression du module sélectionné ; et
amener l'affichage (151) à afficher une image de l'objet cible et une image du module sélectionné.

7. Terminal mobile selon la revendication 6, dans lequel lorsque tous les modules de la pluralité de modules sont sélectionnés, la commande (180) est en outre configurée pour :
amener l'affichage (151) à afficher séquentiellement une pluralité d'images de module correspondant respectivement à un module parmi la pluralité de modules.

8. Terminal mobile selon la revendication 1, dans lequel la commande (180) est en outre configurée pour :
analyser une fonction de l'objet cible, dans lequel le critère prédéfini est formé sur la base de la fonction, dans lequel lorsque l'objet cible contient un espace intérieur, la commande est en outre configurée pour :
segmenter l'objet cible en une pluralité de modules pour permettre l'impression d'un objet qui inclut l'espace intérieur.

9. Terminal mobile selon l'une quelconque des revendications 1 à 8, dans lequel la commande (180) est en outre configurée pour :
amener l'affichage (151) à afficher une image recommandée (621) contenant un même type de module que celui du module restant qui n'est pas le module sélectionné parmi la pluralité de modules.

10. Terminal mobile selon l'une quelconque des revendications 1 à 8, dans lequel lorsque l'image correspond à une image 2D, la commande (180) est en outre configurée pour
amener l'affichage (151) à afficher des informations de modélisation 3D devant être combinées avec l'image 2D.

11. Terminal mobile selon les revendications 1 à 9, dans lequel la commande (180) est en outre configurée pour :
amener l'affichage (151) à afficher des informations de modélisation 3D devant être combinées avec une zone de l'image sur la base d'une entrée tactile ; et
amener l'imprimante 3D à imprimer la zone restante de l'image sous la forme d'un relief.

12. Terminal mobile selon la revendication 1, dans lequel la commande (180) est en outre configurée pour :
amener l'affichage (151) à afficher une image correspondant à chaque module de la pluralité de modules ;
recevoir une entrée tactile pour régler une résolution de l'image correspondant à chaque module de la pluralité de modules ; et
amener l'affichage (151) à afficher une barre de commande pour modifier la forme d'un module quelconque parmi la pluralité de modules sur la base d'un toucher appliqué à ce module.

13. Procédé d'impression, comportant les étapes consistant à :
réaliser une communication sans fil avec une imprimante 3D (200) configurée pour imprimer des objets solides ;
afficher, sur un affichage (151) d'un écran tactile, une photographie capturée d'un objet cible au moyen d'un appareil ou d'une pluralité d'appareils de prise de vues (121) et incluant au moins une partie d'une pluralité de modules, la pluralité de modules étant formée pour représenter des portions respectives d'un objet cible d'après un critère prédéfini ;
détecter une zone d'erreur de l'objet cible contenu dans l'image (380), dans lequel la zone d'erreur est formée dans une zone reliée à une pluralité de modules et correspond à un cas où l'image est hors foyer ou une zone de l'objet solide concerné est cachée par un autre obj et,
amener l'affichage (151) à afficher une fenêtre de sélection (514) recevant une instruction de commande pour la correction de la zone d'erreur, afficher une image alternative (624) pour remplacer la zone d'erreur, dans lequel l'image alternative (624) correspond à des images devant être combinées avec la zone restante de l'image (380) à la place d'une image incluant la zone d'erreur,
afficher une image corrigée (381) dans laquelle la zone restante de l'image (380) est combinée avec l'image alternative (624) ; et
transmettre, via une unité de communication sans fil (110), un signal de commande à l'imprimante 3D (200), dans lequel le signal de commande inclut des données liées à un module sélectionné parmi la pluralité de modules pour permettre à l'imprimante 3D (200) d'imprimer le module sélectionné comme un objet solide qui forme une portion de l'objet cible.
